(19)

**Europäisches Patentamt**
**European Patent Office**
**Office européen des brevets**

(11)  **EP 3 700 744 B1**

(12)  # EUROPEAN PATENT SPECIFICATION

(45) Date of publication and mention
of the grant of the patent:
**20.04.2022 Bulletin 2022/16**

(21) Application number: **18788801.1**

(22) Date of filing: **24.10.2018**

(51) International Patent Classification (IPC):
**B32B 7/04** *(2019.01)*    **B32B 27/08** *(2006.01)*
**B32B 27/32** *(2006.01)*

(52) Cooperative Patent Classification (CPC):
(C-Sets available)
**B32B 7/04; B32B 27/08; B32B 27/32;**
**C08F 210/16;** B32B 2250/02; B32B 2250/03;
B32B 2250/242; B32B 2250/40; B32B 2270/00;
B32B 2307/31; B32B 2307/54; C08F 4/65912;
C08F 4/65916                          (Cont.)

(86) International application number:
**PCT/EP2018/079216**

(87) International publication number:
**WO 2019/081611 (02.05.2019 Gazette 2019/18)**

(54) **MULTILAYER POLYMER FILM**

MEHRSCHICHTIGER POLYMERFILM

FILM POLYMÈRE MULTICOUCHE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **24.10.2017 EP 17198140**
**05.02.2018 EP 18155175**

(43) Date of publication of application:
**02.09.2020 Bulletin 2020/36**

(73) Proprietor: **Borealis AG**
**1020 Vienna (AT)**

(72) Inventors:
• **JAMIESON, John**
**06100 Porvoo (FI)**
• **DE WEVER, William**
**3500 Hasselt (BE)**

(74) Representative: **Dehns**
**St. Bride's House**
**10 Salisbury Square**
**London EC4Y 8JD (GB)**

(56) References cited:
**EP-A1- 1 472 298    EP-A1- 1 961 557**
**EP-A1- 1 961 558    EP-A1- 2 415 598**

(52) Cooperative Patent Classification (CPC): (Cont.)

C-Sets
**C08F 210/16, C08F 2/001;**
**C08F 210/16, C08F 4/6492;**
**C08F 210/16, C08F 4/65927;**
C08F 210/16, C08F 210/08, C08F 210/14,
C08F 2500/12, C08F 2500/05, C08F 2500/26,
C08F 2500/36;
C08F 210/16, C08F 210/08, C08F 2500/12,
C08F 2500/05, C08F 2500/26

C-Sets

**Description**

The present invention relates to a multilayer film, in particular a multilayer film comprising at least two layers, e.g. at least three layers, wherein at least one outer (A) layer comprises a multimodal polymer of ethylene with at least two different comonomers and the (B) layer comprises a multimodal ethylene copolymer of ethylene and a single comonomer or a multimodal ethylene terpolymer different from that used in the outer layer (A).

**Background of the Invention**

Unimodal polyethylene (PE) polymers are often used for film applications. Unimodal PE polymers typically have good optical properties, like low haze, but the melt processing of such polymers is not satisfactory from a production point of view and may cause quality problems of the final product. Multimodal PE polymers with two or more different polymer components are easier to process, but e.g. melt homogenisation of the multimodal PE may be problematic resulting in an inhomogeneous final product which may be evidenced by a high gel content of the final product. This invention seeks new multilayer films which incorporate multimodal polymers.

Multimodal polymers have however been employed in films before. EP1472298A discloses multimodal PE polymer compositions having two different comonomers. The multimodal PE polymers are prepared in the presence of a metallocene catalyst. Examples disclose multimodal PE polymer having two polymer components with, for instance, different type of comonomers.

WO2016/083209 describes a film comprising a multimodal polyethylene terpolymer with good property balance for providing tailored solutions to meet the increasing demands of end application producers, e.g. for reducing the production costs while maintaining or even improving the end product properties.

EP2415598 discloses multilayer films comprising a multimodal terpolymer core layer and an outer layer comprising LDPE, LLDPE or the terpolymer of the core layer.

EP2698251 describes an MDO film comprising a multimodal core layer.

EP1961558 relates to laminated multilayer films comprising a multilayer film laminate on a substrate, wherein said multilayer film laminate comprises a multimodal polyethylene (PE) composition.

EP1961557 relates to a multilayer film structure suitable for agricultural use, which may be prepared by co-extrusion or lamination processes.

The present inventors sought to improve the film properties, in particular sealing properties whilst retaining processability and stiffness. In particular, the inventors have appreciated that excellent properties can be achieved when the core layer comprises a broad molecular weight distribution multimodal copolymer or terpolymer and at least one outer layer comprises a narrow molecular weight distribution multimodal terpolymer. This combination of polymers leads to an ideal balance of processability, stiffness, toughness and sealing performance.

**Summary of Invention**

Viewed from one aspect the invention provides a multilayer film comprising at least two layers, a layer (B) and an outer layer (A), wherein outer layer (A) comprises a multimodal polymer of ethylene with at least two different comonomers selected from alpha-olefins having from 4 to 10 carbon atoms, which multimodal polymer of ethylene has a density of 910 to 935 kg/m$^3$, and a Mw/Mn of 2 to 8; and

said layer (B) comprising a multimodal ethylene copolymer of ethylene and one C4-10 comonomer or a multimodal ethylene terpolymer of ethylene and at least two C4-10 comonomers, or a mixture thereof, wherein said multimodal ethylene copolymer or terpolymer has a density of 910 to 940 kg/m$^3$ and an Mw/Mn of 9 or more. The copolymer or terpolymer used in layer (B) of the present invention may thereby preferably have an Mw/Mn of for example between 9 and 20.

Viewed from another aspect the invention provides a multilayer film comprising at least three layers, a core layer (B) and two outer layers (A) and (C), wherein at least layer (A) comprises a multimodal polymer of ethylene with at least two different comonomers selected from alpha-olefins having from 4 to 10 carbon atoms, which multimodal polymer of ethylene has a density of 910 to 935 kg/m$^3$, and a Mw/Mn of 2 to 8; and

said core layer (B) comprising a multimodal ethylene copolymer of ethylene and one C4-10 comonomer or a multimodal ethylene terpolymer of ethylene and at least two C4-10 comonomers, or a mixture thereof, wherein said multimodal ethylene copolymer or terpolymer has a density of 910 to 940 kg/m$^3$ and an Mw/Mn of 9 or more.

Viewed from another aspect the invention provides the use of a multilayer film as herein described for packaging, such as packaging food stuffs.

Viewed from another aspect the invention provides a process for the preparation of a multilayer film as hereinbefore defined comprising:

coextruding (I) a first composition comprising a multimodal polymer of ethylene with at least two different comonomers selected from alpha-olefins having from 4 to 10 carbon atoms, which multimodal polymer of ethylene has a density of 910 to 935 kg/m$^3$, and a Mw/Mn of 2 to 8 so as to form an outer layer (A); and

(II) a second composition comprising a multimodal ethylene copolymer of ethylene and one C4-10 comonomer or a multimodal ethylene terpolymer of ethylene and at least two C4-10 comonomers, or a mixture thereof, wherein said multimodal ethylene copolymer or terpolymer has a density of 910 to 940 kg/m$^3$ and an Mw/Mn of 9 or more; so as to form a layer (B);

and blowing or casting the coextrudate to form said multilayer film.

**Definitions:**

Throughout the specification, components of the (B) layer will be called (Bc) for the multimodal copolymer and (Bt) for the multimodal terpolymer. The components of those polymers therefore will be called (Bci) and (Bcii) or (Bti) and (Btii). The multimodal polymer of the (A) layer will be called multimodal polymer (A). The components therefore will be called (Ai) and (Aii).

The term "multimodal" means multimodal with respect to molecular weight distribution and includes also therefore bimodal polymers.

Usually, a polymer composition, comprising at least two polyethylene fractions, which have been produced under different polymerisation conditions resulting in different (weight average) molecular weights and molecular weight distributions for the fractions, is referred to as "multimodal". The prefix "multi" relates to the number of different polymer fractions present in the polymer. Thus, for example, the term multimodal polymer includes so called "bimodal" polymers consisting of two fractions. The form of the molecular weight distribution curve, i.e. the appearance of the graph of the polymer weight fraction as a function of its molecular weight, of a multimodal polymer, e.g. LLDPE, will show two or more maxima or at least be distinctly broadened in comparison with the curves for the individual fractions.

Ideally, the molecular weight distribution curve for multimodal polymers of the invention will show two distinction maxima.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In any multimodal polymer, there is by definition a lower molecular weight component (LMW) and a higher molecular weight component (HMW). The LMW component has a lower molecular weight than the higher molecular weight component. This difference is preferably at least 5000 g/mol.

All olefins are alpha olefins.

**Detailed Description of Invention**

This invention relates to a multilayer film with an ideal balance of properties. In particular, the films have a desirable stiffness and toughness whilst retaining good hot tack and sealing properties. The polymers used to make the films of the invention are readily processable. Ideally, the films of the invention are blown films.

The films of the invention must comprise at least two layers, an outer layer (A) and a layer (B). In a preferred embodiment, the film of the invention comprises at least three layers, with outer layers (A) and (C) and a core layer (B). In a three layer film, the outside layers of the multilayer layer film of the invention are labelled layers (A) and (C). Preferably layer (A) is the inner layer and acts as a sealing layer. Any (A) layer of the invention preferably acts as a sealing layer. If a film comprises 4 layers or more layers then the outer layers may still comprise the multimodal polymer as defined for layers (A) and/or (C) of the invention. The (A) layer is preferably a sealing layer and hence should remain outermost on the film.

In a three layer or more construction, the (B) layer is a core layer and must be sandwiched between (A) and (C) layers.

**Outer layers**

Layer (A) and optionally (C) each independently comprise a multimodal polymer of ethylene (A). Ideally, the same multimodal polymer (A) is used in both (A) and (C) layer, if present.

As noted above, the term "multimodal" in context of polymer of the multimodal polymer of ethylene (A) means herein multimodality with respect to melt flow rate (MFR). The multimodal polymer of the (A) layer comprises at least two components (Ai) and (Aii), and these components should have different MFR values.

The multimodal polymer of ethylene (A) can have further multimodality with respect to one or more further properties between the ethylene polymer components (Ai) and (Aii), as will be described later below.

The following preferable embodiments of multimodal ethylene polymer (A) can be combined, e.g. with preferred embodiments for the layer (B) to further define the preferable embodiments of the invention.

As already mentioned above, the multimodal polymer of ethylene (A) is referred herein as "multimodal", since the multimodal ethylene polymer comprises components (Ai) and (Aii). These have been produced under different polymerization conditions resulting in different Melt Flow Rates (MFR, e.g. $MFR_2$). I.e. the polymer composition is multimodal at least with respect to difference in MFR of the two ethylene polymer components (Ai) and (Aii). The term "multi" includes "bimodal" composition consisting of two components having the difference in said MFR.

The multimodal polymer of ethylene (A) comprises at least two different comonomers selected from alpha-olefins having from 4 to 10 carbon atoms, and has a density of 910 to 935 $kg/m^3$, and a Mw/Mn of 2 to 8.

The multimodal polymer of ethylene (A) is preferably a linear low density polyethylene (LLDPE). Even more preferably the density of the multimodal polymer of ethylene (A) is 915 to 930 $kg/m^3$, especially a density of 915 to 925 $kg/m^3$.

Preferably, $MFR_2$ of the polymer of ethylene (A) is 0.5 to 10 g/10min, preferably of 0.5 to 5 g/10 min, especially 1.0 to 2.5 g/10min. Preferably the multimodal polymer of ethylene (A), has $MFR_{21}/MFR_2$ of 13 to 35, preferably of 15 to 30, more preferably of 15 to 25.

The Mw of the multimodal ethylene polymer (A) may be in the range 70,000 to 200,000, preferably 80,000 to 150,000.

The Mw/Mn of the multimodal polymer of ethylene (A) may be 2.0 to 7.0, such as 2.0 to 6.0. Ideally, it is less than 5.0.

In a preferred embodiment, the multimodal polymer of ethylene (A) has one or more of the features:

    a) $MFR_2$ of 0.5 to 10 g/10 min (according to ISO 1133 at 190°C under 2.16 kg load);
    b) $MFR_{21}/MFR_2$ of 13 to 35 ($MFR_{21}$ at 190°C under 21.6 kg load);
    c) MWD of 5 or less, preferably between 2 and 5.

The multimodal polymer of ethylene comprises at least two comonomers preferably selected from 1-butene, 1-hexene and 1-octene, especially 1-butene and 1-hexene.

The multimodal polymer of the (A) layer preferably comprises a minimum of 20 wt% eluting in TREF in the temperature range of 90 to 110°C, such as at least 22wt%, e.g. 20 to 35 wt%.

The multimodal polymer of ethylene (A) preferably comprises a component (Ai) which is an ethylene 1-butene copolymer and an ethylene polymer component (Aii) which is an ethylene 1-hexene copolymer. Ideally, butene and hexene are the only comonomers present.

It is preferred if the ethylene polymer component (Ai) has different, preferably higher, density than the density of the ethylene polymer component (Aii).

Preferably, the multimodal polymer of ethylene (A) comprises the ethylene polymer component (Ai) in an amount of 30 to 70 wt%, preferably of 40 to 60 wt%, more preferably of 35 to 50 wt%, more preferably 40 to 50 wt% and the ethylene polymer component (Aii) in an amount of 70 to 30 wt%, preferably of 60 to 40 wt%, more preferably of 50 to 65 wt%, more preferably 50 to 60 wt%, based on the total amount (100 wt%) of the multimodal polymer of ethylene (A).

Most preferably, the multimodal polymer of ethylene (A) consists of the ethylene polymer components (Ai) and (Aii) as the sole polymer components. Accordingly, the split between ethylene polymer component (Ai) to ethylene polymer component (Aii) is of (30 to 70):(70 to 30) preferably of (40 to 60):(60 to 40), more preferably of (35 to 50):(65 to 50), more preferably of (40 to 50):(50 to 60), wt%.

The multimodal polymer of ethylene (A) preferably comprises a lower Mw component (Ai) and a higher molecular weight component (Aii).

Preferably, component (Ai) has a $MFR_2$ of 1 to 50 g/10 min, preferably of 1 to 40, more preferably of 1 to 30, more preferably of 2 to 20, more preferably of 2 to 15, even more preferably of 2 to 10 g/10 min. More preferably, the ethylene polymer component (Ai) has higher MFR2 than ethylene polymer component (Aii).

Even more preferably, the ratio of the MFR2 of ethylene polymer component (Ai) to the MFR2 of the final multimodal polymer of ethylene (A) is of 2 to 50, preferably of 5 to 40, preferably of 10 to 30, more preferably of 10 to 25, more preferably of 15 to 25.

If the $MFR_2$ of ethylene polymer components, e.g. component (Aii), cannot be measured, because it cannot be isolated from the mixture of at least ethylene polymer components (Ai) and (Aii), then it can be calculated using a log mixing rule.

Naturally, in addition to multimodality with respect to, i.e. difference between, the MFR of the ethylene polymer components (Ai) and (Aii), the polymer of ethylene (A) can also be multimodal e.g. with respect to one or both of the two further properties:

multimodality with respect to, i.e. difference between, the comonomer type or the comonomer content(s) present in the ethylene polymer components (Ai) and (Aii), or both the type and content(s) of comonomers present in the ethylene polymer components (Ai) and (Aii); and/or

the density of the ethylene polymer components (Ai) and (Aii).

Preferably, the multimodal polymer of ethylene (A) of the polymer composition is further multimodal with respect to comonomer type and/or comonomer content (mol-%), preferably wherein the alpha-olefin comonomer having from 4 to 10 carbon atoms of ethylene polymer component (Ai) is different from the alpha-olefin comonomer having from 4 to 10 carbon atoms of ethylene polymer component (Aii), preferably wherein the alpha-olefin comonomer having from 4 to 10 carbon atoms of ethylene polymer component (Ai) is 1-butene and the alpha-olefin comonomer having from 4 to 10 carbon atoms of ethylene polymer component (Aii) is 1 -hexene.

Preferably, the ratio of [the amount (mol%) of alpha-olefin comonomer having from 4 to 10 carbon atoms comonomer present in ethylene polymer component (Ai)] to [the amount (mol%) of at least two alpha-olefin comonomers having from 4 to 10 carbon atoms of the final multimodal polymer of ethylene (A)] is of 0.2 to 0.6, preferably of 0.24 to 0.5, more preferably the ethylene polymer component (Ai) has lower amount (mol%) of comonomer than the ethylene polymer component (Aii).

The comonomer content of component (Ai) and (Aii) can be measured, or, in case, and preferably, one of the components is produced first and the other thereafter in the presence of the first produced in so called multistage process, then the comonomer content of the first produced component, e.g. component (Ai), can be measured and the comonomer content of the other component, e.g. component (Aii), can be calculated according to following formula:

$$\textit{Comonomer content (mol-\%) in component Aii} = \textit{(comonomer content (mol-\%) in}$$
$$\textit{final product - (weight fraction of component Ai * comonomer content (mol-\%) in}$$
$$\textit{component Ai)) / (weight fraction of component Aii)}$$

Preferably, the amount (mol%) of alpha-olefin comonomer having from 4 to 10 carbon atoms present in the ethylene polymer component (Ai) is of 0.03 to 5.0 mol%, preferably of 0.05 to 4.0 mol%, more preferably of 0.1 to 3.0 mol%, even more preferably of 0.1 to 2.0 mol%, more preferably of 0.15 to 1.5 mol%, even more preferably of 0.15 to 1.0 mol%.

More preferably, the total amount of comonomers present in the multimodal polymer of ethylene (A) is of 0.5 to 10 mol%, preferably of 1.0 to 8 mol%, more preferably of 1.0 to 5 mol%, more preferably of 1.5 to 5.0 mol%.

The further specific multimodality, i.e. the difference between, the comonomer type and comonomer content between the ethylene polymer component (Ai) and the ethylene polymer component (Aii) further contributes to highly advantageous sealing properties, e.g. to improved hot tack properties as mentioned above and preferably also to the excellent sealing initiation temperature even in low temperatures. Also the optical properties, like haze, are advantageous.

Even more preferably the multimodal polymer of ethylene (A) of the polymer composition is further multimodal with respect to difference in density between the ethylene polymer component (Ai) and ethylene polymer component (Aii). Preferably, the density of ethylene polymer component (Ai) is different, preferably higher, than the density of the ethylene polymer component (Aii). More preferably the density of the ethylene polymer component (Ai) is of 925 to 950, preferably of 930 to 945 kg/m$^3$.

In a preferred embodiment the multimodal polymer of ethylene (A) comprises at least

- an ethylene polymer component (Ai) and
- an ethylene polymer component (Aii), wherein the MFR$_2$ of ethylene

polymer component (Ai) is higher than the MFR$_2$ of ethylene polymer component (Aii), preferably wherein the ratio of the MFR$_2$ of ethylene polymer component (Ai) to the MFR$_2$ of the final multimodal polymer of ethylene is of 2 to 50, preferably of 5 to 40, preferably of 10 to 30.

It is especially preferred if the density of the multimodal polymer of ethylene (A) is of 915 to 930 kg/m$^3$ and an MFR$_2$ of 0.5 to 10 g/10 min.

It is preferred if the multimodal polymer of ethylene (A) is produced using a single site catalyst, preferably wherein the ethylene polymer components are produced using same single site catalyst.

It is also preferred if the multimodal polymer (A) is bimodal.

The (C) layer if present may be formed from any convenient polyolefinic component such as a polyethylene or a blend of polyethylenes. In particular an LLDPE may be used or a blend of an LLDPE and an LDPE. Preferably, the same components as used in the (A) layer can be used to prepare the (C) layer although these layers do not need to be the same. The preferences above for the (A) layer therefore apply to the (C) layer.

**LDPE Component**

Any layer of the film of the invention may additionally comprise other polymer components as well as standard polymers additives. The (A) layer and/or (C) layer may additionally comprise an LDPE (low density polyethylene.).

Any LDPE is preferably a homopolymer. It may have an $MFR_2$ in the range 0.1-20 g/10 min, more preferably 0.3-10 g/10 min, still more preferably 0.5-5 g/10 min. The density of the LDPE is preferably 905-940 kg/m$^3$, more preferably 910 to 937 kg/m$^3$, e.g. 915 to 935 kg/m$^3$ (ISO 1183).

**Layer (B):**

The layer (B) (often a core layer) comprises a multimodal ethylene copolymer of ethylene and one C4-10 alpha olefin comonomer (Bc) or a multimodal ethylene terpolymer of ethylene and at least two C4-10 alpha olefin comonomers (Bt), or a mixture thereof, wherein said multimodal ethylene copolymer or terpolymer has a density of 910 to 940 kg/m$^3$ and an Mw/Mn of 9 or more. Thus, the terpolymer of the core layer (B) is different to the terpolymer of the (A) layer. It is envisaged that having a broader Mw/Mn polymer present in the core layer maximises the performance of the film, in particular in terms of sealing, toughness, stiffness and processability.

The multimodal ethylene copolymer or terpolymer (Bc) or (Bt) may have a density of no more than 940 kg/m$^3$, e.g. 915-940 kg/m$^3$, especially a density of 918 to 935 kg/m$^3$.

The melt flow rate, $MFR_2$ of the multimodal ethylene copolymer or terpolymer (Bc) or (Bt) is preferably in the range 0.01 to 20 g/10min, e.g. 0.05 to 10 g/10min, preferably 0.05 to 5.0 g/10min. An especially preferred range is 0.1 to 3.0 g/10min.

The melt flow rate, $MFR_5$ of the multimodal ethylene copolymer or terpolymer (Bc) or (Bt) is preferably in the range 0.1 to 10 g/10min, e.g. 0.1 to 5.0 g/10min, preferably 0.5 to 2.5 g/10min.

The $MFR_{21}$ of the multimodal ethylene copolymer or terpolymer (Bc) or (Bt) may be in the range 5 to 100, preferably 10 to 50 g/10min.

The Mw of the multimodal ethylene copolymer or terpolymer (Bc) or (Bt) may be in the range 100,000 to 300,000, preferably 130,000 to 250,000.

The Mw/Mn of the multimodal ethylene copolymer or terpolymer (Bc) or (Bt) may be in the range 10 to 30, preferably 10 to 25, such as 10 to 20.

The multimodal ethylene copolymer or terpolymer (Bc) or (Bt) may be formed from ethylene along with one or at least two $C_{4-10}$ alpha-olefin comonomers, e.g. 1-butene, 1-hexene or 1-octene.

The multimodal polymer of the (B) layer preferably comprises a minimum of 20 wt% eluting in TREF in the temperature range of 90 to 110°C, such as at least 25wt%, e.g. 20 to 50 wt%. The use of a polymer (B) having a high elution volume in TR2 (90 to 110°C), in combination with the other required features of the invention (i.e. the comonomer requirements and Mw/Mn) gives the best sealing/stiffness performance in the eventual films.

The multimodal polymer of ethylene (Bc) or (Bt) has preferably a shear thinning value, $SHI_{5/300}$, of 20 to 70, preferably of 30 to 60.

**The multimodal ethylene copolymer (Bc)**

Where the polymer is a multimodal ethylene copolymer (Bc) it contains a single comonomer. It is preferably an ethylene hexene copolymer, ethylene octene copolymer or ethylene butene copolymer, especially an ethylene butene copolymer. The amount of comonomer present is preferably 0.5 to 12 mol%, e.g. 2 to 10% mole relative to ethylene, especially 3 to 7% mole.

As stated above the multimodal ethylene copolymer (Bc) comprises at least a LMW component (Bci) and a HMW component (Bcii).

Where the multimodal polymer is a copolymer (Bc), the LMW component preferably has a $MFR_2$ of at least 50, preferably 50 to 3000 g/10 min, more preferably at least 100 g/10 min e.g. 110 to 500 g/10 min. The molecular weight of the low molecular weight component should preferably range from 20,000 to 50,000, e.g. 25,000 to 40,000.

The density of the lower molecular weight component may range from 930 to 980 kg/m$^3$, e.g. 940 to 970 kg/m$^3$, more preferably 945 to 955 kg/m$^3$ in the case of copolymer and 940 to 975 kg/m$^3$.

The lower molecular weight component preferably forms from 30 to 70 wt%, e.g. 40 to 60% by weight of the multimodal ethylene copolymer (Bc) with the higher molecular weight component forming 70 to 30 wt%, e.g. 40 to 60% by weight.

The higher molecular weight component has a lower $MFR_2$ and a lower density than the lower molecular weight component.

The higher molecular weight component has preferably an $MFR_2$ of less than 1 g/10 min, preferably less than 0.5 g/10 min, especially less than 0.2 g/10min, and a density of less than 915 kg/m$^3$, e.g. less than 910 kg/m$^3$, preferably less than 905 kg/m$^3$. The Mw of the higher molecular weight component may range from 100,000 to 1,000,000, preferably 250,000 to 500,000.

In one embodiment, component (Bci) is a homopolymer and component (Bcii) is a copolymer. It is preferred if both (Bci) and (Bcii) are copolymers of the same comonomer. More preferably both components are ethylene butene copolymers.

**Multimodal ethylene terpolymer (Bt)**

In the multimodal ethylene terpolymer (Bt) of use in this invention, it is preferred if there are two comonomers present in the HMW component (Btii), i.e. it is a terpolymer component.

In one embodiment, the lower molecular weight component (Bti) is a copolymer of ethylene and 1-butene or a lower molecular weight copolymer of ethylene and a C6-C10-alpha olefin; and the higher molecular weight component (Btii) is a copolymer of ethylene and 1-butene, if the lower molecular weight polymer (i) is a copolymer of ethylene and a C6-C10-alpha olefin, or a terpolymer of ethylene, 1-butene and a C6-C10-alpha olefin.

However, it is preferred if the lower molecular weight (LMW) component is an ethylene homopolymer (Bti). The multimodal terpolymer (Bt) of the invention is preferably one in which the HMW component (Btii) comprises repeat units deriving from ethylene and at least two other $C_{4-10}$ alpha olefin monomers such as 1-butene and one $C_{6-10}$ alpha olefin monomer. Ethylene preferably forms the majority of the HMW component.

The overall comonomer content in the terpolymer is preferably 0.5 to 8.0 % by mol, preferably 0.7 to 6 % by mol, more preferably 1.0 to 4.0 % by mol and most preferably 1.5 to 3.0 % by mol.

Butene is preferably present in an amount of 0.2 to 2.5 % by mol, such as 0.4 to 2.0 % by mol, more preferably 0.5 to 1.5 % by mol and most preferably 0.6 to 1.0 % by mol.

The C6 to C10 alpha olefin is preferably present in an amount of 0.3 to 5.5 % by mol, preferably 0.4 to 4 % by mol, more preferably 0.7 to 3. % by mol and most preferably 1 to 2.4 % by mol, especially 1.2 to 2.0 % by mol.

The multimodal terpolymer (Bt) may be formed from ethylene along with at least two of 1-butene, 1-hexene or 1-octene. Preferably, the multimodal terpolymer, comprises an ethylene butene hexene terpolymer HMW component and a LMW homopolymer component. The use of a terpolymer component of ethylene with 1-butene and 1-octene comonomers, or a terpolymer of ethylene with 1-octene and 1-hexene comonomers is also envisaged.

As stated above a multimodal terpolymer (Bt) comprises at least a LMW component (Bti) and a HMW component (Btii).

The LMW component of terpolymer preferably has a $MFR_2$ of at least 50, preferably 50 to 3000 g/10 min, more preferably at least 100 g/10 min. The molecular weight of the low molecular weight component should preferably range from 20,000 to 50,000, e.g. 25,000 to 40,000.

The density of the lower molecular weight component may range 940 to 975 kg/m$^3$, especially 960 to 978 kg/m$^3$.

The lower molecular weight component preferably forms from 30 to 70 wt%, e.g. 40 to 60% by weight of the multimodal terpolymer with the higher molecular weight component forming 70 to 30 wt%, e.g. 40 to 60% by weight.

The higher molecular weight component has a lower $MFR_2$ and a lower density than the lower molecular weight component.

The higher molecular weight component has preferably an $MFR_2$ of less than 1 g/10 min, preferably less than 0.5 g/10 min, especially less than 0.2 g/10min, and a density of less than 915 kg/m$^3$, e.g. less than 910 kg/m$^3$, preferably less than 905 kg/m$^3$. The Mw of the higher molecular weight component may range from 100,000 to 1,000,000, preferably 250,000 to 500,000.

The multimodal terpolymer is preferably one formed using a Ziegler Natta catalyst.

It is most preferred if the multimodal terpolymer comprises an ethylene homopolymer and an ethylene butene hexene copolymer component, ideally made by Ziegler Natta catalyst.

It is also preferred if the multimodal polymer (Bc) or (Bt) is bimodal.

The layer (B) can comprise a mixture of the multimodal copolymer (Bc) and multimodal terpolymer (Bt) but preferably the core layer contains one or other of these components.

It is however possible for the core layer to comprise a small amount, e.g. up to 30 wt% of the multimodal ethylene polymer (A) as hereinbefore defined in connection with the (A) layer. Most preferably, the (B) layer comprises the multimodal ethylene copolymer or terpolymer (Bc) or (Bt) as the only polyolefinic component.

It is most preferred if the multimodal ethylene copolymer or terpolymer (Bc) or (Bt) is produced using a Ziegler Natta catalyst.

**Other Components**

The films of the invention may contain standard additives/fillers. The optional additives and fillers and the used amounts thereof are conventional in the field of film applications. Examples of such additives are, among others, antioxidants, process stabilizers, UV- stabilizers, pigments, fillers, antistatic additives, antiblock agents, nucleating agents, acid scavengers as well as polymer processing agent (PPA).

It is understood herein that any of the additives and/or fillers can optionally be added in so called master batch which comprises the respective additive(s) together with a carrier polymer.

**Manufacture of the multimodal polymers**

Multimodal (e.g. bimodal) polymers can be made by mechanical blending two or more, separately prepared polymer components or, preferably, by in-situ blending in a multistage polymerisation process during the preparation process of the polymer components. Both mechanical and in-situ blending are well known in the field.

Accordingly, preferred multimodal polymers, are prepared by in-situ blending in a multistage, i.e. two or more stage, polymerization or by the use of two or more different polymerization catalysts, including multi- or dual site catalysts, in a one stage polymerization.

Preferably the multimodal polymers are produced in at least two-stage polymerization using the same catalyst, e.g. a single site (for polymer (A) or a Ziegler-Natta catalyst (for polymers (B)). Thus, for example two slurry reactors or two gas phase reactors, or any combinations thereof, in any order can be employed. Preferably however, the multimodal polymer is made using a slurry polymerization in a loop reactor followed by a gas phase polymerization in a gas phase reactor.

A loop reactor - gas phase reactor system is marketed by Borealis as a BORSTAR reactor system. Any multimodal polymer, e.g. LLDPE, present is thus preferably formed in a two stage process comprising a first slurry loop polymerisation followed by gas phase polymerisation.

The conditions used in such a process are well known. For slurry reactors, the reaction temperature will generally be in the range 60 to 110°C (e.g. 85-110°C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100°C. In such reactors, polymerization may if desired be effected under supercritical conditions. Slurry polymerisation may also be carried out in bulk where the reaction medium is formed from the monomer being polymerised.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a non-reactive gas such as nitrogen or low boiling point hydrocarbons such as propane together with monomer (e.g. ethylene).

Preferably, the lower molecular weight polymer fraction is produced in a continuously operating loop reactor where ethylene is polymerised in the presence of a polymerization catalyst as stated above and a chain transfer agent such as hydrogen. The diluent is typically an inert aliphatic hydrocarbon, preferably isobutane or propane.

The higher molecular weight component can then be formed in a gas phase reactor using the same catalyst.

Where the higher molecular weight component is made second in a multistage polymerisation it is not possible to measure its properties directly. However, the skilled man is able to determine the density, of the higher molecular weight component using Kim McAuley's equations. Thus, density can be found using K. K. McAuley and J. F. McGregor: On-line Inference of Polymer Properties in an Industrial Polyethylene Reactor, AIChE Journal, June 1991, Vol. 37, No, 6, pages 825-835.

The density is calculated from McAuley's equation 37, where final density and density after the first reactor is known.

Preferred Ziegler-Natta catalysts for use in the manufacture of the multimodal copolymer (Bc) or terpolymer (Bt) comprise at least a catalyst component formed from a transition metal compound of Group 4 to 6 of the Periodic Table (IUPAC, Nomenclature of Inorganic Chemistry, 1989), a metal compound of Group 1 to 3 of the Periodic Table (IUPAC), optionally a compound of group 13 of the Periodic Table (IUPAC), and optionally an internal organic compound, like an internal electron donor. A ZN catalyst may also comprise further catalyst component(s), such as a cocatalyst, also called as activators, and optionally external additives, like external electron donors.

Suitable Ziegler-Natta catalysts preferably contain a magnesium compound, an aluminium compound and a titanium compound supported on a particulate support.

The particulate support can be an inorganic oxide support, such as silica, alumina, titania, silica-alumina, silica-titania or a $MgCl_2$ based support. Preferably, the support is silica or a $MgCl_2$ based support. Examples of such catalysts are given, among others in WO 95/35323, WO 01/55230, WO 2004/000933, EP 810235 and WO 99/51646.

The Ziegler-Natta catalyst is used together with an activator. Suitable activators are Group 13 metal compounds, typically Group 13 alkyl compounds and especially aluminium alkyl compounds, where the alkyl group contains 1 to 16 C-atoms. These compounds include trialkyl aluminium compounds, such as trimethylaluminium, triethylaluminium, tri-isobutylaluminium, trihexylaluminium and tri-n-octylaluminium, alkyl aluminium halides, such as ethylaluminium dichloride, diethylaluminium chloride, ethylaluminium sesquichloride, dimethylaluminium chloride and the like. Especially preferred activators are trialkylaluminiums, of which triethylaluminium, trimethylaluminium and tri-isobutylaluminium are particularly used.

The use of Ziegler Natta catalysis leads to the desired broad Mw/Mn values.

The polymers of use on the invention are however commercially available materials.

The multimodal polymer of ethylene (A) is preferably produced using a single site catalyst comprising an organometallic compound (Q).

The organometallic compound (Q) comprises a transition metal (M) of Group 3 to 10 of the Periodic Table (IUPAC 2007) or of an actinide or lanthanide. The term "an organometallic compound (Q)" in accordance with the present invention includes any metallocene of a transition metal which bears at least one organic (coordination) ligand and exhibits the catalytic activity alone or together with a cocatalyst. The transition metal compounds are well known in the art and the present invention covers compounds of metals from Group 3 to 10, e.g. Group 3 to 7, or 3 to 6, such as Group 4 to 6 of the Periodic Table, (IUPAC 2007), as well lanthanides or actinides.

In an embodiment the organometallic compound (Q) has the following formula (I):

$$(L)_m R_n MX_q \qquad (I)$$

wherein

"M" is a transition metal (M) transition metal (M) of Group 3 to 10 of the Periodic Table (IUPAC 2007),
each "X" is independently a monoanionic ligand, such as a $\sigma$-ligand,
each "L" is independently an organic ligand which coordinates to the transition metal "M",
"R" is a bridging group linking said organic ligands (L),
"m" is 1, 2 or 3, preferably 2
"n" is 0, 1 or 2, preferably 1 ,
"q" is 1, 2 or 3, preferably 2 and
m+q is equal to the valency of the transition metal (M).
"M" is preferably selected from the group consisting of zirconium (Zr), hafnium (Hf), and titanium (Ti), more preferably selected from the group consisting of zirconium (Zr) and hafnium (Hf). "X" is preferably a halogen, most preferably Cl.

Most preferably the organometallic compound (Q) is a metallocene complex which comprises a transition metal compound, as defined above, which contains a cyclopentadienyl, indenyl or fluorenyl ligand as the substituent "L". Further, the ligands "L" may have substituents, such as alkyl groups, aryl groups, arylalkyl groups, alkylaryl groups, silyl groups, siloxy groups, alkoxy groups or other heteroatom groups or the like. Suitable metallocene catalysts are known in the art and are disclosed, among others, in WO-A- 95/12622, WO-A-96/32423, WO-A-97/28170, WO-A-98/32776, WO-A-99/61489, WO-A- 03/010208, WO-A-03/051934, WO-A-03/051514, WO-A-2004/085499, EP-A- 1752462 and EP-A-1739103.

Most preferred single site catalyst is a metallocene catalyst which means the catalytically active metallocene complex, as defined above, together with a cocatalyst, which is also known as an activator. Suitable activators are metal alkyl compounds and especially aluminium alkyl compounds known in the art. Especially suitable activators used with metallocene catalysts are alkylaluminium oxy-compounds, such as methylalumoxane (MAO), tetraisobutylalumoxane (TIBAO) or hexaisobutylalumoxane (HIBAO).

More preferably the ethylene polymer (A) is produced using, i.e. in the presence of, the same metallocene catalyst. The multimodal polymer of ethylene (A) may be produced in any suitable polymerization process known in the art. Into the polymerization zone is also introduced ethylene, optionally an inert diluent, and optionally hydrogen and/or comonomer. The ethylene polymer component (Ai) is preferably produced in a first polymerization zone and the ethylene polymer component (Aii) is produced in a second polymerization zone. The first polymerization zone and the second polymerization zone may be connected in any order, i.e. the first polymerization zone may precede the second polymerization zone, or the second polymerization zone may precede the first polymerization zone or, alternatively, polymerization zones may be connected in parallel. However, it is preferred to operate the polymerization zones in cascaded mode. The polymerization zones may operate in slurry, solution, or gas phase conditions or their combinations. Suitable processes comprising cascaded slurry and gas phase polymerization stages are disclosed, among others, in WO-A-92/12182 and WO-A-96/18662.

It is often preferred to remove the reactants of the preceding polymerization stage from the polymer before introducing it into the subsequent polymerization stage. This is preferably done when transferring the polymer from one polymerization stage to another.

The catalyst may be transferred into the polymerization zone by any means known in the art. For example, it is possible to suspend the catalyst in a diluent and maintain it as homogeneous slurry, to mix the catalyst with a viscous mixture of grease and oil and feed the resultant paste into the polymerization zone or to let the catalyst settle and introduce portions of thus obtained catalyst mud into the polymerization zone.

The polymerization, preferably of the ethylene polymer component (Ai), in the first polymerization zone is preferably conducted in slurry. Then the polymer particles formed in the polymerization, together with the catalyst fragmented and dispersed within the particles, are suspended in the fluid hydrocarbon. The slurry is agitated to enable the transfer of reactants from the fluid into the particles.

The polymerization usually takes place in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons and preferred diluent is propane.

The ethylene content in the fluid phase of the slurry may be from 2 to about 50 % by mole, preferably from about 2 to about 20 % by mole and in particular from about 3 to about 12 % by mole. The temperature in the slurry polymerization is typically from 50 to 1 15 °C, preferably from 60 to 110 °C and in particular from 70 to 100 °C. The pressure is from 1 to 150 bar, preferably from 10 to 100 bar.

The slurry polymerization may be conducted in any known reactor used for slurry polymerization. Such reactors include a continuous stirred tank reactor and a loop reactor. It is especially preferred to conduct the polymerization in loop reactor. In such reactors the slurry is circulated with a high velocity along a closed pipe by using a circulation pump. Loop reactors are generally known in the art and examples are given, for instance, in US-A- 4582816, US-A-3405109, US-A-3324093, EP-A-479186 and US-A-5391654.

It is sometimes advantageous to conduct the slurry polymerization above the critical temperature and pressure of the fluid mixture. Such operation is described in US-A-5391654. In such operation the temperature is typically from 85 to 110 °C, preferably from 90 to 105 °C and the pressure is from 40 to 150 bar, preferably from 50 to 100 bar.

The slurry may be withdrawn from the reactor either continuously or intermittently. A preferred way of intermittent withdrawal is the use of settling legs where slurry is allowed to concentrate before withdrawing a batch of the concentrated slurry from the reactor. The continuous withdrawal is advantageously combined with a suitable concentration method, e.g. as disclosed in EP-A- 1310295 and EP-A- 1591460.

Hydrogen may be fed into the reactor to control the molecular weight of the polymer as known in the art. Furthermore, one or more alpha-olefin comonomers are added into the reactor e.g. to control the density of the polymer product. The actual amount of such hydrogen and comonomer feeds depends on the catalyst that is used and the desired melt index (or molecular weight) and density (or comonomer content) of the resulting polymer. The polymerization, preferably of the ethylene polymer component (Aii), in the second polymerization zone is preferably conducted in gas phase, preferably in a fluidized bed reactor, in a fast fluidized bed reactor or in a settled bed reactor or in any combination of these. The polymerization in the second polymerization zone is more preferably conducted in a fluidized bed gas phase reactor, wherein ethylene is polymerized together with at least one comonomer in the presence of a polymerization catalyst and, preferably in the presence of the reaction mixture from the first polymerization zone comprising the ethylene polymer component (Ai) in an upwards moving gas stream. The reactor typically contains a fluidized bed comprising the growing polymer particles containing the active catalyst located above a fluidization grid. The polymer bed is fluidized with the help of the fluidization gas comprising the olefin monomer, eventual comonomer(s), eventual chain growth controllers or chain transfer agents, such as hydrogen, and eventual inert gas. The fluidization gas is introduced into an inlet chamber at the bottom of the reactor. One or more of the above-mentioned components may be continuously added into the fluidization gas to compensate for losses caused, among other, by reaction or product withdrawal.

The fluidization gas passes through the fluidized bed. The superficial velocity of the fluidization gas must be higher that minimum fluidization velocity of the particles contained in the fluidized bed, as otherwise no fluidization would occur. On the other hand, the velocity of the gas should be lower than the onset velocity of pneumatic transport, as otherwise the whole bed would be entrained with the fluidization gas.

When the fluidization gas is contacted with the bed containing the active catalyst the reactive components of the gas, such as monomers and chain transfer agents, react in the presence of the catalyst to produce the polymer product. At the same time the gas is heated by the reaction heat.

The unreacted fluidization gas is removed from the top of the reactor and cooled in a heat exchanger to remove the heat of reaction. The gas is cooled to a temperature which is lower than that of the bed to prevent the bed from heating because of the reaction. It is possible to cool the gas to a temperature where a part of it condenses. When the liquid droplets enter the reaction zone they are vaporised. The vaporisation heat then contributes to the removal of the reaction heat. This kind of operation is called condensed mode and variations of it are disclosed, among others, in WO-A-2007/025640, US-A-4543399, EP-A-699213 and WO-A-94/25495. It is also possible to add condensing agents into the recycle gas stream, as disclosed in EP-A-696293. The condensing agents are non-polymerizable components, such as n-pentane, isopentane, n-butane or isobutane, which are at least partially condensed in the cooler.

The gas is then compressed and recycled into the inlet chamber of the reactor. Prior to the entry into the reactor fresh reactants are introduced into the fluidization gas stream to compensate for the losses caused by the reaction and product withdrawal. It is generally known to analyze the composition of the fluidization gas and introduce the gas components to keep the composition constant. The actual composition is determined by the desired properties of the product and the catalyst used in the polymerization.

The catalyst may be introduced into the reactor in various ways, either continuously or intermittently. Where the gas phase reactor is a part of a reactor cascade the catalyst is usually dispersed within the polymer particles from the preceding polymerization stage. The polymer particles may be introduced into the gas phase reactor as disclosed in EP-A- 1415999 and WO-A-00/26258. Especially if the preceding reactor is a slurry reactor it is advantageous to feed the slurry directly into the fluidized bed of the gas phase reactor as disclosed in EP-A-887379, EP-A-887380, EP-A-887381 and EP-A-991684.

The polymeric product may be withdrawn from the gas phase reactor either continuously or intermittently. Combinations of these methods may also be used. Continuous withdrawal is disclosed, among others, in WO-A-00/29452. Intermittent withdrawal is disclosed, among others, in US-A-4621952, EP-A-188125, EP-A-250169 and EP-A-579426.

Also antistatic agent(s), such as water, ketones, aldehydes and alcohols, may be introduced into the gas phase reactor if needed. The reactor may also include a mechanical agitator to further facilitate mixing within the fluidized bed. Typically the fluidized bed polymerization reactor is operated at a temperature within the range of from 50 to 100 °C, preferably from 65 to 90 °C. The pressure is suitably from 10 to 40 bar, preferably from 15 to 30 bar. The polymerization of at least ethylene polymer component (Ai) and ethylene polymer component (Aii) in the first and second polymerization zones may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step may be conducted in slurry or in gas phase. Preferably prepolymerization is conducted in slurry, preferably in a loop reactor. The prepolymerization is then preferably conducted in an inert diluent, preferably the diluent is a low-boiling hydrocarbon having from 1 to 4 carbon atoms or a mixture of such hydrocarbons.

The temperature in the prepolymerization step is typically from 0 to 90 °C, preferably from 20 to 80 °C and more preferably from 40 to 70 °C.

The pressure is not critical and is typically from 1 to 150 bar, preferably from 10 to 100 bar. The catalyst components are preferably all introduced to the prepolymerization step.

Preferably the reaction product of the prepolymerization step is then introduced to the first polymerization zone. Also preferably, as mentioned above, the prepolymer component is calculated to the amount of the ethylene polymer component (Ai). It is within the knowledge of a skilled person to adapt the polymerization conditions in each step as well as feed streams and resident times to obtain the claimed multimodal polymer of ethylene (A).

The multimodal polymer of ethylene (Ai) obtained from the second polymerization zone, which is preferably a gas phase reactor as described above, is the subjected to conventional post reactor treatment to remove i.a. the unreacted components.

Thereafter, typically, the obtained polymer is extruded and pelletized. The extrusion may be conducted in the manner generally known in the art, preferably in a twin screw extruder. One example of suitable twin screw extruders is a co-rotating twin screw extruder. Those are manufactured, among others, by Coperion or Japan Steel Works. Another example is a counter-rotating twin screw extruder. Such extruders are manufactured, among others, by Kobe Steel and Japan Steel Works. Before the extrusion at least part of the desired additives, as mentioned above, are preferably mixed with the polymer. The extruders typically include a melting section where the polymer is melted and a mixing section where the polymer melt is homogenised. Melting and homogenisation are achieved by introducing energy into the polymer. Suitable level of specific energy input (SEI) is from about 150 to about 450 kWh/ton polymer, preferably from 175 to 350 kWh/ton.

**Film of the invention**

It is preferred if the multimodal polymer (A) forms the most abundant polymer present within the layer (A) and, optionally (C) layer , i.e. it has the largest weight percentage. Ideally, at least 60 wt% of the (A) layer and/or (C) layer of the film is formed from a multimodal polymer, preferably at least 70 wt%, such as at least 77 wt%, preferably at least 80 wt%, preferably between 80 wt% and 100 wt%..

If a further component is present in layer (A) or (C), such as an LDPE component, this may be present is an amount of 1 to 20 wt%, such as 2 to 15 wt%, especially 7.5 to 15 wt%. An (A) layer comprising 1 to 20 wt% of LDPE and 80 to 99 wt% of multimodal polymer (A) is preferred.

Layers (A) and (C) may be identical or different.

In a preferred embodiment therefore the film of the invention comprises a layer (A) which comprise at least 80 wt% of the multimodal polymer (A) and optionally 1 to 20 wt% LDPE.

The (B) layer preferably consists of a single multimodal polymer (Bc) or (Bt), especially a single multimodal terpolymer (Bt) as the only polyolefinic component. In this regard, the term consists of is used to exclude the presence of other polyolefinic components. It will be appreciated that any layer of the films of the invention may comprise polymer additives. Moreover, such polymer additives may be carried on a support (a masterbatch) that might be polyolefinic. The presence of these additive components is not excluded by the term "consists of'.

It however within the scope of the invention for the (B) layer to comprise other polymer components. In particular, the (B) layer may comprise small amounts, such as 1 to 30 wt% of the multimodal polymer (A) of the (A) layer. Preferred amounts are 5 to 15 wt%.

Ideally, at least 60 wt% of the (B) layer of the film is formed from a multimodal copolymer (Bc) or terpolymer (Bt), preferably at least 70 wt%, such as at least 77 wt%, preferably at least 80 wt%.

Whilst the (B) layer may comprise other polymer components, that is not preferred either. The (B) layer is thus preferably free of LDPE.

It is however most preferred if the (B) layer is free of the multimodal polymer of the (A) layer. It is most preferred if the (B) layer comprises, such as consists of the multimodal terpolymer (Bt).

Each layer of the multilayer film of the invention may consist of the polymers defined in the claims. The term "consists" of implies the absence of any other polymer components. However, it will be appreciated that any film layer can contain standard additives which may be added as part of a masterbatch.

The films of the present invention may comprise at least 2 layers, such as 3 to 7 layers, e.g. 3, 5 or 7 layers. The (A) layer is always an outside layer, i.e. a sealing layer. The (B) layer is often sandwiched by at least an (A) layer and a (C) layer. It may be that a film is produced on a 5-layer film coextruder and may have layers ABBBC. The three B layers in such a film are regarded as a single layer and hence this is considered a three layer film. It may have the structure A-BDE-C. Such a film is within the invention. Three layer films are preferred.

If a layer is present in the films of the invention other than layer (A), (B) or (C) as defined herein, that layer may comprise a polyolefin such as a polyethylene, in particular an LLDPE. In a five layer construction, layers D and E for example may comprise an LLDPE. In a preferred option, any layer other than layer (A) or (C) may comprise a multimodal ethylene copolymer of ethylene and one C4-10 comonomer or a multimodal ethylene terpolymer of ethylene and at least two C4-10 comonomers, or a mixture thereof, wherein said multimodal ethylene copolymer or terpolymer has a density of 910 to 940 kg/m$^3$ and an Mw/Mn of 9 or more, i.e. as defined for layer (B) herein.

The films are preferably produced by any conventional film extrusion procedure known in the art including cast film and blown film extrusion. Most preferably, the film is a blown or cast film. E.g. the blown film is produced by extrusion through an annular die and blowing into a tubular film by forming a bubble which is collapsed between nip rollers after solidification. This film can then be slit, cut or converted (e.g. gusseted) as desired.

Conventional film production techniques may be used in this regard. If the preferable blown or cast film is a multilayer film then the various layers are typically coextruded. The skilled man will be aware of suitable extrusion conditions. The resulting films may have any thickness conventional in the art. The thickness of the film is not critical and depends on the end use.

Thus, films may have a thickness of, for example, 300 μm or less, typically 6 to 200 μm, preferably 10 to 180 μm, e.g. 20 to 150 μm or 20 to 120 μm. If desired, the thicknesses of less than 100 μm, e.g. less than 50 μm are possible. Films of the invention with thickness even less than 20 μm can also be produced whilst maintaining good mechanical properties.

It is preferred if each layer of the films of the invention forms at least 10% of the thickness of the film, such as at least 20 %. For a two layer film, layer thickness may be 30 to 70 wt% for each layer, such as 40 to 60 wt% for each layer. An even split of layers is most preferred (50:50 for a two layer film therefore).

For a three layer film, layer thickness may be 15 to 40 wt% for each layer, such as 20 to 40 wt% for each layer. An even split of layers is most preferred (33:33:33 %for a three layer film therefore).

Further preferably, the film of the invention has a hot tack force (maximum hot tack force) of 3.0 N or more, when measured according to ASTM F 1921 - 98 (2004), method B and measured from a film sample (40 μm thickness). Preferably the hot tack is up to 5.0 N. More preferably the hot tack force is of 3.2 to 5.0 N.

The film of the invention preferably a tensile modulus (in machine direction (MD) of 250 to 500 MPa, preferably 300 to 450 MPa, when determined according to ISO 527-1 and ISO 527-3 and measured from a film sample (40 μm thickness).

The film has preferably a hot tack initiation temperature of less than 105°C when measured according to ASTM F 1921 - 98 (2004), method B and measured from a film sample (40 μm thickness). Preferably the hot tack initiation temperature is 80 °C or more. More preferably the hot tack initiation temperature is between 82 to 95 °C.

The film of the invention preferably has a seal initiation temperature (SIT) of for example less than 100°C, further preferred between 80°C and 97°C . SIT is measured with a variation to ASTM F 1921 - 12, method B as further explained in details in the examples below. Sealing Initiation Temperature (SIT) may thereby be the temperature to achieve 5N force or IN force.

It is preferred if the film of the invention is not oriented after its formation in an orienting apparatus. It should not therefore be stretched in the machine or transverse direction or both, i.e. it is not an MDO or BOPE film.

## Applications

The films of the invention are preferably used in packaging of household, food, healthcare or beverage products. The formation of heavy duty shipping sacks, lamination films and pouches is also preferred. In particular, the films are of use in form fill and seal applications, especially for fresh produce.

The invention will now be described with reference to the following non limiting examples and figures.

## Description of figures

Figure 1a-d: Cold seal curves (or SIT) and Hot Tack curves for $40\mu m$ and $20\mu m$ films of film example 1.
Figure 2 shows hot tack properties of the films of film example 2.

In all figures, temp denotes the temperature of the sealing jaws in °C and force denotes the separation force in N, headings denote the type of test settings used (i.e. either SIT or HotTack) and the thickness of the film tested (either $40\mu m$ or $20\mu m$). When No film thickness value is present in the heading this is then a $40\mu m$ film.

## Determination methods

**Density** of the materials is measured according to ISO 1183-1:2012 (method A) in Isododecane (immersion liquid) at 23 °C. Samples are prepared by compression moulding (CM) of plates at 180 °C, the average cooling rate of CM plates is appoximately 15 °C/min. Test specimens are prepared by die cutting of 4 pieces with a diameter of 40 mm.

The test specimens are conditioned for at least 16 h at 23 °C and 50 % relative humidity before testing. Determination of density starts 24 ($\pm$ 2) hours after compression moulding.

## Melt Flow Rate (MFR) or Melt Index (MI)

The melt flow rate (MFR) is determined according to ISO 1133 and is indicated in g/10 min. The MFR is an indication of the melt viscosity of the polymer. The MFR is determined at 190°C for PE. The load under which the melt flow rate is determined is usually indicated as a subscript, for instance $MFR_2$ is measured under 2.16 kg load, $MFR_5$ is measured under 5 kg load or $MFR_{21}$ is measured under 21.6 kg load.

## Molecular weight averages, molecular weight distribution (Mn, Mw, Mz, MWD)

Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N} (A_i/M_i)} \quad (1)$$

$$M_w = \frac{\sum_{i=1}^{N} (A_i \, x \, M_i)}{\sum_{i=1}^{N} A_i} \quad (2)$$

$$M_z = \frac{\sum_{i=1}^{N} (A_i \, x \, M_i^2)}{\sum_{i=1}^{N} (A_i x M_i)} \quad (3)$$

For a constant elution volume interval $\Delta V_i$, where $A_i$, and $M_i$ are the chromatographic peak slice area and polyolefin molecular weight (MW), respectively associated with the elution volume, Vi, where N is equal to the number of data points obtained from the chromatogram between the integration limits.

A high temperature GPC instrument, equipped with either infrared (IR) detector (IR4 or IR5 from PolymerChar (Valencia, Spain) or differential refractometer (RI) from Agilent Technologies, equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200 μL of sample solution was injected per analysis. Data collection was performed using either Agilent Cirrus software version 3.3 or PolymerChar GPC-IR control software.

The column set was calibrated using universal calibration (according to ISO 16014-2:2003) with 19 narrow MWD polystyrene (PS) standards in the range of 0.5 kg/mol to 11, 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$\mathbf{K_{PS} = 19 \times 10^{-3} \ mL/g, \alpha_{PS} = 0.655}$$

$$\mathbf{K_{PE} = 39 \times 10^{-3} \ mL/g, \qquad \alpha_{PE} = 0.725}$$

$$\mathbf{K_{PP} = 19 \times 10^{-3} \ mL/g, \alpha_{PP} = 0.725}$$

A third order polynomial fit was used to fit the calibration data.

All samples were prepared in the concentration range of 0.5 -1 mg/ml and dissolved at 160 °C for 2.5 hours for PP or 3 hours for PE under continuous gentle shaking.

**Comonomer Content (%wt and %mol)** was determined quantitative nuclear-magnetic resonance (NMR) spectroscopy.

**Quantitative $^{13}$C{$^1$H} NMR** spectra recorded in the molten-state using a Bruker Avance III 500 NMR spectrometer operating at 500.13 and 125.76 MHz for $^1$H and $^{13}$C respectively. All spectra were recorded using a $^{13}$C optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilising the NOE at short recycle delays of 3 s {pollard04, klimke06} and the RS-HEPT decoupling scheme {fillip05, griffin07}. A total of 1024 (1k) transients were acquired per spectra.

Quantitative $^{13}$C{$^1$H} NMR spectra were processed, integrated and relevant quantitative properties determined from the integrals. All chemical shifts are internally referenced to the bulk methylene signal (δ+) at 30.00 ppm {randall89}. Characteristic signals corresponding to the incorporation of 1-butene were observed {randall89} and the comonomer fraction calculated as the fraction of 1-butene in the polymer with respect to all monomer in the polymer.

The amount of isolated 1-butene incorporated in EEBEE sequences was quantified using the integral of the *B2 sites at 39.9 ppm accounting for the number of reporting sites per comonomer:

$$B = I_{*B2}$$

With no other signals indicative of other comonomer sequences, i.e. consecutive comonomer incorporation, observed the total 1-butene comonomer content was calculated based solely on the amount of isolated 1-butene sequences:

$$Btotal = B$$

The total mole fraction of 1-butene in the polymer was then calculated as:

$$fB = Btotal \ / \ ( \ Etotal + Btotal + Htotal \ )$$

Characteristic signals corresponding to the incorporation of 1-hexene were observed {randall89} and the comonomer fraction calculated as the fraction of 1-hexene in the polymer with respect to all monomer in the polymer.

The amount isolated 1-hexene incorporated in EEHEE sequences was quantified using the integral of the *B4 sites at 38.3 ppm accounting for the number of reporting sites per comonomer:

$$H = I_{*B4}$$

The amount consecutively incorporated 1-hexene in EEHHEE sequences was quantified using the integral of the $\alpha\alpha B4B4$ site at 40.5 ppm accounting for the number of reporting sites per comonomer:

$$HH = 2 * I\alpha\alpha B4B4$$

The amount non-consecutively incorporated 1-hexene in EEHEHEE sequences was quantified using the integral of the $\beta\beta B4B4$ site at 24.7 ppm accounting for the number of reporting sites per comonomer:

$$HEH = 2 * I\beta\beta B4B4$$

Due to the overlap of the signals from the *B4 and *$\beta$B4B4 sites from isolated (EEHEE) and non-consecutively (EEHEHEE) incorporated 1-hexene respectively the total amount of isolated 1-hexene incorporation is corrected based on the amount of non-consecutive 1-hexene present:

$$H = I_{*B4} - 2 * I\beta\beta B4B4$$

The total 1-hexene content was calculated based on the sum of isolated, consecutive and non-consecutively incorporated 1-hexene:

$$Htotal = H + HH + HEH$$

The total mole fraction of 1-hexene in the polymer was then calculated as:

$$fH = Htotal / ( Etotal + Btotal + Htotal )$$

The amount of ethylene was quantified using the integral of the bulk methylene ($\delta$+) sites at 30.00 ppm. This integral included the $\gamma$ site as well as the 3B4 sites from 1-hexene. The total ethylene content was calculated based on the bulk integral and compensating for the observed 1-butene and 1-hexene sequences and end-groups:

$$E = I_{\delta+} / 2$$

Characteristic signals resulting from saturated end-groups were observed. The content of such saturated end-groups was quantified using the average of the integral of the signals at 22.8 and 32.2 ppm assigned to the 2s and 3s sites respectively:

$$S = (1/2)*( I_{2S} + I_{3S} )$$

The presence of isolated comonomer units is corrected for based on the number of comonomer units and saturated end-groups present:

$$Etotal = E + (3/2)*B + (2/2)*H + (1/4)*HH + (3/4)*HEH + (3/2)*S$$

The mole percent comonomer incorporation is calculated from the mole fraction:

$$B \ [mol\%] = 100 * fB$$

$$H \ [mol\%] = 100 * fH$$

The weight percent comonomer incorporation is calculated from the mole fraction:

$$B \ [wt\%] = 100 * ( fB * 56.11) / ( (fB * 56.11) + (fH * 84.16) + ((1-(fB + fH)) * 28.05) )$$

$$H \ [wt\%] = 100 * ( fH * 84.16 ) / ( (fB * 56.11) + (fH * 84.16) + ((1-(fB + fH)) * 28.05) )$$

randall89

J. Randall, Macromol. Sci., Rev. Macromol. Chem. Phys. 1989, C29, 201.
klimke06
Klimke, K., Parkinson, M., Piel, C., Kaminsky, W., Spiess, H.W., Wilhelm, M., Macromol. Chem. Phys. 2006;207:382.
parkinson07
Parkinson, M., Klimke, K., Spiess, H.W., Wilhelm, M., Macromol. Chem. Phys. 2007;208:2128.
pollard04
Pollard, M., Klimke, K., Graf, R., Spiess, H.W., Wilhelm, M., Sperber, O., Piel, C., Kaminsky, W., Macromolecules 2004;37:813.
filip05
Filip, X., Tripon, C., Filip, C., J. Mag. Resn. 2005, 176, 239
griffin07
Griffin, J.M., Tripon, C., Samoson, A., Filip, C., and Brown, S.P., Mag. Res. in Chem. 2007 45, S1, S198
castignolles09
Castignolles, P., Graf, R., Parkinson, M., Wilhelm, M., Gaborieau, M., Polymer 50 (2009) 2373

**TREF method**

The chemical composition distribution was determined by analytical Temperature Rising Elution fractionation as described by Soares, J.B.P., Fractionation, In: Encyclopedia Of Polymer Science and Technology, John Wiley & Sons, New York, pp. 75-131, Vol. 10, 2001. The separation of the polymer in TREF is according to their crystallinity in solution. The TREF profiles were generated using a CRYSTAF-TREF 200+ instrument manufactured by PolymerChar S.A. (Valencia, Spain).
The polymer sample was dissolved in 1,2,4-trichlorobenzene (TCB, stabilized with 250 mg/L 2,6-Di tert butyl-4-methyl-phenol) at a concentration between 1.5 and 2.0 mg/ml at 150 °C for 180 min and 1.8 mL of the sample solution was injected into the column (8 mm inner diameter, 15 cm length, filled with inert e.g. glass beads). The column oven was then rapidly cooled to 110 °C and held at 110 °C for 30 min for stabilization purpose and it was later slowly cooled to 35°C under a constant cooling rate (0.1 °C/min). The polymer was subsequently eluted from the column with 1,2,4-trichlorobenzene (stabilized with 250 mg/L 2,6-Di tert butyl-4-methylphenol) at a flow rate of 0.5 mL/min at 35 °C for a period of 10 min followed by a temperature increase from 35 °C to 135 °C at a constant heating rate of 0.5 °C/min with a flow rate of 0.5ml/min. The concentration of the polymer during elution was recorded by an infrared detector (measuring the C-H absorption at 3.5 micrometer wavelength). The detector response was plotted as a function of the temperature. The normalized concentration plot was presented as fractogram together with the cumulative concentration signal normalized to 100.

**Definition of High crystalline fraction (HCF) and Low crystalline fraction (LCF):**

The high crystalline fraction (HCF) is the amount in wt.-% of the polymer fraction with will elute between 90°C and 110°C elution temperature, which mainly contains the homo-polyethylene chains or chains with a very low branching content.

The low crystalline fraction (LCF) is than the amount in wt.-% of the polymer fraction with elutes between 35 and 90°C

**Hot tack & SIT**

Hot tack, Hot tack initiation temperature and Hot tack force were measured according to ASTM F 1921 - 12, method B, while SIT was measured with a minor variation to ASTM F 1921 - 12, method B. The following settings were used:

- Instrument: J&B Model 4000

- Seal bar : 50x5 mm flat brass - nickel with Niptef (teflon) coating (surface roughness ~ 1 $\mu$m )

- Force measurement: Piezo electric force transducer

- Temperature measurement: 2 separate heating systems (upper and lower)

**Table 1: Sealing parameters used for the different tests.**

| Parameter | SIT | Hot Tack | Units |
|---|---|---|---|
| Sample dimensions | width: 25 length: 320 | width: 25 length: 320 | [mm] |
| Sealing pressure | 0.4 | 0.15 | [N/mm$^2$] |
| Sealing / Dwell time | 1 | < 25$\mu$m: 0.5 $\geq$ 25$\mu$m: 1 | [sec] |
| Delay time | 30 | 0.2 | [sec] |
| Clamp separation rate | 42 | 200 | [mm/sec] |
| Sealing area | 25 * 5 | 25 * 5 | [mm] |

*Procedure Sealing Initiation Temperature SIT:*

3 test specimens per temperature in 5°C steps (2°C in case of sharp increase / decrease) with measurement stopped at burn through. Sealing Initiation Temperature (SIT) is the temperature to achieve 5N force (or IN force).

*Procedure Hot Tack (ASTM F1921-98 (2004):*

3 test specimens per temperature in 5°C steps (2°C in case of sharp increase / decrease) with measurement started two temperature steps below 0.2 - 0.3 N and stopped at burn through.

Hot Tack is the highest force with failure mode "peel". Hot Tack Initiation Temperature (HTIT) is the temperature to achieve IN force. Hot tack force is the maximum force in the HotTack curve.

**Impact Strength** is determined on Dart-drop (g/50%). Dart-drop is measured using ASTM D1709 - 16a, method "A". A dart with a 38 mm diameter hemispherical head is dropped from a height of 0.66 m onto a film sample clamped over a hole at a temperature of 23 °C. If the specimen fails, the weight of the dart is reduced and if it does not fail the weight is increased. At least 20 specimens are tested. The weight resulting in failure of 50% of the specimens is calculated and this provides the dart drop impact (DDI) value (g). The relative DDI (g/$\mu$m) is then calculated by dividing the DDI by the thickness of the film.

**Tensile Properties** are measured according to ISO 527-1/-3 (modified) at 23 °C in machine and transverse direction. This method is used to investigate the tensile behaviour of films and for determining the tensile modulus, tensile strength and other aspects of the tensile stress/strain relationship under defined conditions. A 15 mm parallel-sided specimen (specimen type 2) is extended along its major axis at constant test speed of 200 mm/min until the specimen breaks. The secant modulus of elasticity is determined between 0.05 % and 0.25 % elongation with a testspeed of 1 mm/min. The initial distance between grips is 100 mm.measured according to ASTM D 882-A on film samples prepared as described under below "Film Sample preparation". The speed of testing was 5mm/min, the test temperature was 23°C and the width of the film was 25 mm.

**Example 1 (multimodal polymer with homopolymer/terpolymer components)**

A multimodal polymer was prepared in a multistage reactor system containing a loop reactor and a gas phase reactor. A prepolymerization step preceded the actual polymerisation step. The prepolymerization stage was carried out in slurry in a 50 $dm^3$ loop reactor at about 70 °C in a pressure of about 65 bar using the polymerisation catalyst prepared analogously to Example 1 of EP 1378528 using silica support having average particle size of 25 $\mu$m and triethylaluminium as the cocatalyst.

The molar ratio of aluminum of the cocatalyst to titanium of the catalyst was about 20. Ethylene was fed in a ratio of (200 g of $C_2$)/(1g/catalyst). Propane was used as the diluent and hydrogen was fed in amount to adjust the $MFR_2$ of the prepolymer to about 10 g/10 min.

The obtained slurry together with prepolymerized catalyst and triethyl aluminum cocatalyst were introduced into a 500 $dm^3$ loop reactor operated at 95°C and 60 bar pressure, wherein also continuous feeds of propane, ethylene and hydrogen were introduced such that ethylene content in the reaction mixture was 5.1 mol%. The molar ratio of $H_2/C_2$ in the reactor was 395 mol/kmol when the process conditions were adjusted to form a polymer having an $MFR_2$ of 400 g/10 min and a density of about 970 $kg/m^3$.

The polymer was withdrawn from the loop reactor and introduced into a flash tank operated at 3 bar pressure and 60 °C temperature.

From the flash tank the polymer was introduced into a fluidized bed gas phase reactor, where also additional ethylene, 1 -butene and 1-hexene comonomer and hydrogen were added, together with nitrogen as an inert gas to produce the HMW component in the presence of the LMW component such that ethylene content in the reactor gas was 7.3 mol%.. The gas phase reactor was operated at a temperature of 80 °C and a pressure of 20 bar and the ratio of $H_2/C_2$, was 10 mol/kmol, $C_6/C_2$ was 100mol/kmol and $C_4/C_2$ 70 mol/kmol in the reactor when the process conditions were adjusted to form a final polymer which, after collecting the polymer, blending with additives and extruding into pellets in a counter-rotating twin-screw extruder JSW CIM90P, resulted in a polymer having an $MFR_2$ of 0.18 g/10 min and density of 931 $kg/m^3$. The split between the polymer produced in the loop reactor and the polymer produced in the gas phase reactor was 39/61. The polymer produced in the prepolymerisation amounted to about 0.5 to 1 % of the total polymer and was calculated to the amount of the Loop product.

**Example 2 (multimodal polymer with butene copolymer components)**

A multimodal polymer was prepared in a multistage reactor system containing a loop reactor and a gas phase reactor. A prepolymerization step preceded the actual polymerisation step. The prepolymerization stage was carried out in slurry in a 50 $dm^3$ loop reactor at about 70 °C in a pressure of about 65 bar using the polymerisation catalyst prepared analogously to Example 1 of EP 1378528using silica support having average particle size of 25 $\mu$m and triethylaluminium as the cocatalyst.

The molar ratio of aluminium of the cocatalyst to titanium of the catalyst was about 20. Ethylene was fed in a ratio of (400 g of $C_2$)/(1g/catalyst). Propane was used as the diluent, 1-butene was fed in amounts of (40 g of C4/)/(1 kg of C2) and hydrogen was fed in amount to adjust the $MFR_2$ of the prepolymer to about 10 g/10 min.

The obtained slurry together with prepolymerized catalyst and triethyl aluminum cocatalyst were introduced into a 500 $dm^3$ loop reactor operated at 85°C and 60 bar pressure, wherein also continuous feeds of propane, ethylene hydrogen and 1-butene were introduced such that ethylene content in the reaction mixture was 6.7 mol%. The molar ratio of $H_2/C_2$ in the reactor was 235 mol/kmol and the mole ratio of 1-butene to ethylene was 570 mol/kmol when the process conditions were adjusted to form a polymer having an $MFR_2$ of 300 g/10 min and a density of about 951 $kg/m^3$.

The polymer was withdrawn from the loop reactor and introduced into a flash tank operated at 3 bar pressure and 60 °C temperature.

From the flash tank the polymer was introduced into a fluidized bed gas phase reactor, where also additional ethylene, 1 -butene comonomer and hydrogen were added, together with nitrogen as an inert gas to produce the HMW component in the presence of the LMW component such that ethylene content in the reactor gas was 19 mol%.. The gas phase reactor was operated at a temperature of 80 °C and a pressure of 20 bar and the ratio of $H_2/C_2$, was 3 mol/kmol and $C_4/C_2$ 645 mol/kmol in the reactor when the process conditions were adjusted to form a final polymer which, after collecting the polymer, blending with additives and extruding into pellets in a counter-rotating twin-screw extruder JSW CIM90P, resulted in a polymer having an $MFR_2$ of 0.47 g/10 min and density of 922 $kg/m^3$. The split between the polymer produced in the loop reactor and the polymer produced in the gas phase reactor was 45/55. The polymer produced in the prepolymerisation amounted to about 0.5 to 1 % of the total polymer and was calculated to the amount of the Loop product.

**Example 3 (Multimodal butene hexene terpolymer)**

Catalyst Preparation Example 3

130 grams of a metallocene complex bis(1-methyl-3-n-butylcyclopentadienyl) zirconium (IV) dichloride (CAS no. 151840-68-5), and 9.67 kg of a 30% solution of commercial methylalumoxane (MAO) in toluene were combined and 3.18 kg dry, purified toluene was added. The thus obtained complex solution was added onto 17 kg silica carrier Sylopol 55 SJ (supplied by Grace) by very slow uniform spraying over 2 hours. The temperature was kept below 30°C. The mixture was allowed to react for 3 hours after complex addition at 30°C.

**Polymerisation**

A multimodal polymer was prepared in a multistage reactor system containing a loop reactor and a gas phase reactor. A prepolymerization step preceded the actual polymerisation step. The prepolymerization stage was carried out in slurry in a 50 dm$^3$ loop reactor at about 60 °C in a pressure of about 65 bar using the polymerisation catalyst prepared above. Ethylene was fed in a ratio of (220 g of C$_2$)/(1g/catalyst). Propane was used as the diluent, 1-butene was fed in amounts of (25 g of C4/)/(1 kg of C2) and hydrogen was fed in amount to adjust the MFR$_2$ of the prepolymer to about 6 g/10 min.
The obtained slurry together with prepolymerized catalyst were introduced into a 500 dm$^3$ loop reactor operated at 85°C and 64 bar pressure, wherein also continuous feeds of propane, ethylene hydrogen and 1-butene were introduced such that ethylene content in the reaction mixture was 4.0 mol%. The molar ratio of H$_2$/C$_2$ in the reactor was 0.15 mol/kmol and the mole ratio of 1-butene to ethylene was 110 mol/kmol when the process conditions were adjusted to form a polymer having an MFR$_2$ of 6 g/10 min and a density of about 938 kg/m$^3$.
The polymer was withdrawn from the loop reactor and introduced into a flash tank operated at 3 bar pressure and 60 °C temperature.
From the flash tank the polymer was introduced into a fluidized bed gas phase reactor, where also additional ethylene, 1 -hexene comonomer and hydrogen were added, together with nitrogen as an inert gas to produce the HMW component in the presence of the LMW component such that ethylene content in the reactor gas was 37 mol%. The gas phase reactor was operated at a temperature of 75 °C and a pressure of 20 bar and the ratio of H$_2$/C$_2$, was 0.4 mol/kmol and C$_6$/C$_2$ 38 mol/kmol in the reactor when the process conditions were adjusted to form a final polymer which, after collecting the polymer, blending with additives and extruding into pellets in a counter-rotating twin-screw extruder JSW CIM90P, resulted in a polymer having an MFR$_2$ of 1.5 g/10 min and density of 918 kg/m$^3$. The split between the polymer produced in the loop reactor and the polymer produced in the gas phase reactor was 42/58. The polymer produced in the prepolymerisation amounted to about 1.0 to 1.8 % of the total polymer and was calculated to the amount of the Loop product.

**Other Materials used**

FG5190 is a unimodal LLDPE available from Borealis.

| | | |
|---|---|---|
| Exceed 1018 is a commercial LLDPE copolymer of Exxonmobil : | | density 918 kg/m$^3$ and MFR$_2$ of 1.0 g/10min. |
| FT5230 is an LDPE MFR$_2$: | 0.75g/10min; Density: | 923kg/m$^3$ |
| LD150BW is an LDPE MFR$_2$: | 0.75g/10min; Density: | 923kg/m$^3$ |

The properties of the polymers prepared in examples 1, 2 and 3 are described in table 2. Analytical TREF for the polymers is given in table 3.

**Table 2 Polymer properties**

| Material | Mn | Mw | Mw/Mn | C4 mol | C6 mol |
|---|---|---|---|---|---|
| Ex 2 | 11450 | 175000 | 15.2 | 4.1 | - |
| Ex 1 | 10650 | 179000 | 16.8 | 0.8 | 1.4 |
| Ex 3 | 23900 | 93500 | 3.9 | 0.4 | 2.8 |

**Table 3 TREF data**

| Sample | SF temp | SF | Temp range 1 (°C) | Temp range 1 (wt.-%) | TR 2 (°C) | TR 2 (wt.-%) |
|--------|---------|-------|-------------------|----------------------|-----------|--------------|
| Ex 1 | 35 | 11.71 | 35 - 90 | 42.1 | 90 - 110 | 47.1 |
| Ex 2 | 35 | 18.2 | 35 - 90 | 53.2 | 90 - 110 | 28.9 |
| Ex 3 | 35 | 6.86 | 35 - 90 | 64.9 | 90 - 110 | 29.5 |

## Film Example 1: Film Preparation

The materials were converted to three layer A / B / A films on a small scale Dr. Collin line according to the settings in Table 4 below:

**Table 4:**

| Parameter | Value | Unit |
|-----------|-------|------|
| Extruder A (outer): | 25mm / 30D | |
| Extruder B (core): | 30mm / 30D | |
| Extruder C (inner): | 25mm / 30D | |
| BUR | 1:2.5 | |
| FLH | 100 | mm [~] |
| Die Diameter | 60 | Mm |
| Die Gap | 1.5 | Mm |
| Screw | General purpose three zone | |
| Output | 10 | kg/hr |

- Temperature profile of ca. 190°C at zone 1 → 200°C at the die.
- Melt temp should be in the range of 180°C → 210°C.

*Film Construction:*

- A / B / A : 25% / 50% / 25% for both 40μm and 20μm films.
- A layers: 90 wt% Ex 3 + 10wt% FT5230.
- B layer 100wt%: FG5190* or 100wt% Ex. 2 or 100wt% Ex. 1

*Sealing Test*

The results are presented in table 5:

**Table 5**

| (A) layer | Core layer | Thickness μm | Test | SIT °C @5N | SIT °C @1N | HTIT °C |
|---|---|---|---|---|---|---|
| 90% Ex 3 + 10% FT5230 | FG5190* | 20.00 | Hot tack | | | 93.3 |
| 90% Ex 3 + 10% FT5230 | Ex 2 | 20.00 | Hot tack | | | 88.5 |
| 90% Ex 3 + 10% FT5230 | Ex1 | 20.00 | Hot tack | | | 85.1 |
| 90% Ex 3 + 10% FT5230 | FG5190* | 40.00 | Hot tack | | | 87.7 |
| 90% Ex 3 + 10% FT5230 | Ex 2 | 40.00 | Hot tack | | | 87.2 |
| 90% Ex 3 + 10% FT5230 | Ex 1 | 40.00 | Hot tack | | | 82.2 |
| 90% Ex 3 + 10% FT5230 | FG5190* | 20.00 | sit | – | 93.6 | |
| 90% Ex 3 + 10% FT5230 | Ex 2 | 20.00 | sit | 100.4 | 89.4 | |
| 90% Ex 3 + 10% FT5230 | Ex 1 | 20.00 | sit | 92.0 | 87.0 | |
| 90% Ex 3 + 10% FT5230 | FG5190* | 40.00 | sit | 95.0 | 88.1 | |
| 90% Ex 3 + 10% FT5230 | Ex 2 | 40.00 | sit | 95.4 | 86.2 | |
| 90% Ex 3 + 10% FT5230 | Ex 1 | 40.00 | sit | 92.7 | 85.4 | |

**\*Comparative examples**

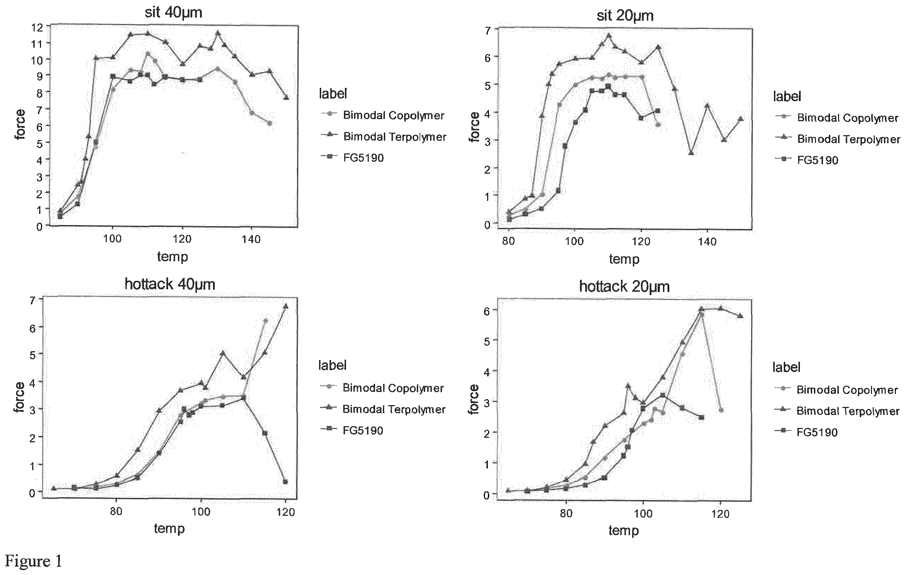

These results are depicted graphically in figure 1a-d.

From table 5 it can be seen that by replacing the core material, the sealing performance can be improved in the order FG5190 → Ex 2 → Ex 1 since the initiation temperatures are reduced, the maximum force achieved is increased and the end temperature is generally higher under both SIT and Hot Tack testing conditions. This is especially noticeable in thin films of 20 μm.

This gives the inventive film the capability to be sealed at lower temperatures, allows a broader sealing window and requires higher forces for deformation increasing the seal integrity or robustness. Since it is especially noticeable in small films this allows a greater scope for down gauging in the application.

**Film Example 2** - **Alpine 5-Layer**

The sealing layer material (90 wt% Ex 3) + 10wt% LDPE (LD150BW) was fed to extruders A and C only, identical core material was fed to extruders B, C and E where Ext C was larger 90mm vs. 45mm for the others.

Film 1: (A + 10% LD) / B / B / B / (A+ 10% LD) (Film is ABDEC)

Some comparative films were prepared using 90 wt% Exceed 1018 + 10% LDPE (LD150BW) as the A layer.

The alpine 5-Layer film line production settings are outlined below.

**Table 6: Alpine 5-Layer production settings.**

| Parameter | Value | Unit |
|---|---|---|
| Extruder layers A/C (outer): | 65 | mm |
| Extruder layers B/E (core): | 65 | mm |
| Extruder layer D (core): | 90 | mm |
| BUR | 1:2.5 | |
| FLH | ~800 | mm |
| Die Diameter | 400 | mm |
| Die Gap | 1.8 | mm |
| Throughput | 400 | kg/hr |
| Nip | 57.4 | m/min |
| Meter weight | 116.1 | g/m |

- Thickness distribution

  - 20% / 20% / 20% / 20% / 20%
  - A/B/B/B/A
  - A: 8 μm (20%) / B:24 μm (60%) / A: 8 μm (20%)

- Temperature profile extruder °C
  - 30-190-190-190-190-190-195-195-195

- Die temperature °C
  - 205-205-205-205-205-205-205

**Results**

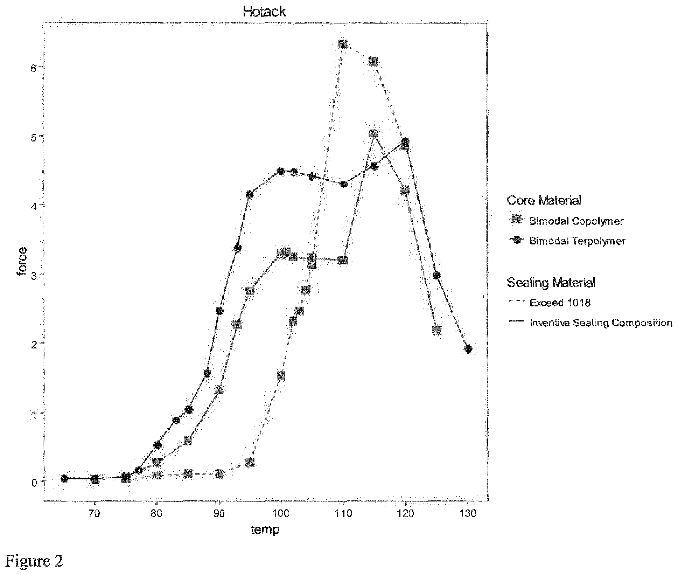

The materials performance was tested as above and is shown in figure 2. The sealing performance and extended film properties are shown in table 7. From table 7 and figure 2 it can be seen that changing the sealing layer from the comparative Exceed 1018 to the inventive Ex 3 while still using Ex 2 as a core material HotTack performance is significantly improved in that the sealing initiates at a much lower temperature and has a force plateau above IN for a much longer temperature range meaning films from the inventive sealing layer polymer (Ex 3) can be produced at lower temperatures and with a wider window and seal integrity or robustness.

Further changing Ex 2 to Ex 1 as core material additionally reduces the initiation temperature and increases the force plateau region above IN further enhancing the sealing performance.

From Table 8 it can be additionally seen that changing the core to material Ex 1 improves the overall balance of properties, increasing the DDI which improves the film toughness and increasing the film stiffness allowing a greater load carrying capability and increasing the scope for down gauging (i.e., thinner films need to carry the same load so therefore need a higher modulus).

In summary the inventive films allow a better balance of properties with enhance sealing performance of lower initiation, higher sealing forces and larger sealing window in combination with higher stiffness and good toughness.

**Table 7: Extended film properties from Alpine 5-Layer conversion.**

| A layer material | | 90 wt% Exceed 1018* | 90 wt% Ex 3 | 90 wt% Ex 3 |
|---|---|---|---|---|
| A layer LDPE (LD150BW) | [%] | 10 | 10 | 10 |
| Core | | Ex 2 | Ex 2 | Ex 1 |
| HTIT temp to IN force | °C | 98 | 88 | 84 |
| Hot Tack Force | N | 2.5 | 3.3 | 4.5 |
| Tensile Modulus MD | MPa | 278 | 280 | 382 |
| Tensile Modulus TD | MPa | 348 | 364 | 502 |
| DDI F50 | g | 313 | 220 | 307 |
| *Comparative example | | | | |

**Claims**

1. A multilayer film comprising at least two layers, a layer (B) and an outer layer (A), wherein outer layer (A) comprises a multimodal polymer of ethylene with at least two different comonomers selected from alpha-olefins having from 4 to 10 carbon atoms and wherein said layer (B) comprises a multimodal ethylene copolymer of ethylene and one C4-10 comonomer or a multimodal ethylene terpolymer of ethylene and at least two C4-10 comonomers, or a mixture thereof,

   wherein the multimodal polymer of ethylene of layer (A) has a density of 910 to 935 kg/m$^3$, and a Mw/Mn of 2 to 8; and
   wherein said multimodal ethylene copolymer or terpolymer of layer (B) has a density of 910 to 940 kg/m$^3$ and an Mw/Mn of 9 or more.

2. A multilayer film as claimed in claim 1 comprising at least three layers, a core layer (B) and two outer layers (A) and (C), wherein at least layer (A) comprises a multimodal polymer of ethylene with at least two different comonomers selected from alpha-olefins having from 4 to 10 carbon atoms, which multimodal polymer of ethylene has a density of 910 to 935 kg/m$^3$, and a Mw/Mn of 2 to 8; and
   said core layer (B) comprising a multimodal ethylene copolymer of ethylene and one C4-10 comonomer or a multimodal ethylene terpolymer of ethylene and at least two C4-10 comonomers, or a mixture thereof, wherein said multimodal ethylene copolymer or terpolymer has a density of 910 to 940 kg/m$^3$ and an Mw/Mn of 9 or more.

3. The film according to claim 1 or 2 wherein the outer layer (A) comprises at least 80 wt% of the multimodal polymer of ethylene.

4. The film according to any preceding claim wherein the outer layer (A) comprises 1 to 20 wt% of LDPE.

5. A film as claimed in any preceding claim comprising two or three layers only.

6. A film as claimed in any preceding claim wherein the (B) layer comprises a multimodal ethylene terpolymer.

7. A film as claimed in any preceding claim wherein the (B) layer comprises at least 70 wt% of multimodal ethylene copolymer or terpolymer, preferably at least 80 wt%.

8. A film as claimed in any preceding claim wherein the (B) layer additionally comprises 1 to 30 wt%, preferably 5 to 15 wt% of a multimodal polymer of ethylene with at least two different comonomers selected from alpha-olefins having from 4 to 10 carbon atoms, which multimodal polymer of ethylene has a density of 910 to 935 kg/m$^3$, and a Mw/Mn of 2 to 8.

9. A film according to any of the preceding claims, wherein the multimodal polymer of ethylene of layer (A) has one or more of the features:

a) MFR$_2$ of 0.5 to 10 g/10 min (according to ISO 1133 at 190°C under 2.16 kg load);
b) MFR$_{21}$/ MFR$_2$ of 13 to 35 (MFR$_{21}$ at 190°C under 21.6 kg load);
c) MWD of 5 or less.

10. The film according to any of the preceding claims, wherein the multimodal polymer of ethylene of layer (A) comprises 1-butene and 1-hexene, in particular wherein the multimodal polymer of ethylene comprises an ethylene butene copolymer component (i) and an ethylene hexene copolymer component (ii), where butene/hexene are the only comonomers present in the respective component.

11. The film according to any preceding claim wherein the (B) layer comprises a bimodal ethylene/1-butene/C6-C10-alpha-olefin terpolymer, which can comprise:

(i) a lower molecular weight homopolymer of ethylene and
(ii) a higher molecular weight terpolymer of ethylene, 1-butene and a C6-C10-alpha-olefin, e.g. 1-hexene;

or

(i) a lower molecular weight copolymer of ethylene and 1-butene or a lower molecular weight copolymer of ethylene and a C6-C10-alpha olefin;

and

(i) a higher molecular weight copolymer of ethylene and 1-butene, if the lower molecular weight polymer (i) is a copolymer of ethylene and a C6-C10-alpha olefin, or a terpolymer of ethylene, 1-butene and a C6-C10-alpha olefin.

12. The film according to any preceding claim having a seal initiation temperature of less than 100°C.

13. The film according to any preceding claim having a hot tack force 3.20 N or more.

14. A multilayer film as claimed in claim 1 to 13 wherein the multimodal polymer of ethylene of layer (A) comprises a minimum of 20 wt% eluting in TREF in the temperature range of 90 to 110°C; and
the multimodal ethylene copolymer or terpolymer of layer (B) comprises a minimum of 20 wt% eluting in TREF (Temperature Rising Elution Fractionation method as disclosed in the description) in the temperature range of 90 to 110°C.

15. The film according to any preceding claim having a thickness of 10 to 100 11m.

16. A process for the preparation of a multilayer film as claimed in claim 1 to 13 comprising:

coextruding (I) a first composition comprising a multimodal polymer of ethylene with at least two different comonomers selected from alpha-olefins having from 4 to 10 carbon atoms, which multimodal polymer of ethylene has a density of 910 to 935 kg/m3, and a Mw/Mn of 2 to 8 so as to form an outer layer (A); and
(II) a second composition comprising a multimodal ethylene copolymer of ethylene and one C4-10 comonomer or a multimodal ethylene terpolymer of ethylene and at least two C4-10 comonomers, or a mixture thereof, wherein said multimodal ethylene copolymer or terpolymer has a density of 910 to 940 kg/m3 and an Mw/Mn of 9 or more; so as to form a layer (B);
and blowing or casting the coextrudate to form said multilayer film.

**Patentansprüche**

1. Mehrschichtfolie, die mindestens zwei Schichten umfasst, eine Schicht (B) und eine Außenschicht (A), wobei die Außenschicht (A) ein multimodales Polymer aus Ethylen mit mindestens zwei unterschiedlichen Comonomeren umfasst, die aus Alphaolefinen ausgewählt sind, die 4 bis 10 Kohlenstoffatome aufweisen, und wobei die Schicht (B) ein multimodales Ethylen-Copolymer aus Ethylen und ein C4-10-Comonomer oder ein multimodales Ethylen-Terpolymer aus Ethylen und mindestens zwei C4-10-Comonomere oder ein Gemisch davon umfasst,

   wobei das multimodale Polymer aus Ethylen der Schicht (A) eine Dichte von 910 bis 935 kg/m$^3$ und ein Mw/Mn von 2 bis 8 aufweist; und
   wobei das multimodale Ethylen-Copolymer oder -Terpolymer der Schicht (B) eine Dichte von 910 bis 940 kg/m$^3$ und ein Mw/Mn von 9 oder mehr aufweist.

2. Mehrschichtfolie nach Anspruch 1, die mindestens drei Schichten umfasst, eine Kernschicht (B) und zwei Außenschichten (A) und (C), wobei mindestens die Schicht (A) ein multimodales Polymer aus Ethylen mit mindestens zwei unterschiedlichen Comonomeren umfasst, die aus Alphaolefinen ausgewählt sind, die 4 bis 10 Kohlenstoffatome aufweisen, wobei das multimodale Polymer aus Ethylen eine Dichte von 910 bis 935 kg/m$^3$ und ein Mw/Mn von 2 bis 8 aufweist; und
   die Kernschicht (B) ein multimodales Ethylen-Copolymer aus Ethylen und mindestens ein C4-10-Comonomer oder ein multimodales Ethylen-Terpolymer aus Ethylen und mindestens zwei C4-10-Comonomere oder ein Gemisch davon umfasst, wobei das multimodale Ethylen-Copolymer oder -Terpolymer eine Dichte von 910 bis 940 kg/m$^3$ und ein Mw/Mn von 9 oder mehr aufweist.

3. Folie nach Anspruch 1 oder 2, wobei die Außenschicht (A) mindestens 80 Gew.-% des multimodalen Polymer aus Ethylen umfasst.

4. Folie nach einem vorstehenden Anspruch, wobei die Außenschicht (A) 1 bis 2 Gew.- % LDPE umfasst.

5. Folie nach einem vorstehenden Anspruch, die nur zwei oder drei Schichten umfasst.

6. Folie nach einem vorstehenden Anspruch, wobei die Schicht (B) ein multimodales Ethylen-Terpolymer umfasst.

7. Folie nach einem vorstehenden Anspruch, wobei die Schicht (B) mindestens 70 Gew.-% multimodales Ethylen-Copolymer oder -Terpolymer, bevorzugt mindestens 80 Gew.-% umfasst.

8. Folie nach einem vorstehenden Anspruch, wobei die Schicht (B) zusätzlich 1 bis 30 Gew.-%, bevorzugt 5 bis 15 Gew.-% eines multimodalen Polymers aus Ethylen mit mindestens zwei unterschiedlichen Comonomeren umfasst, die aus Alphaolefinen ausgewählt sind, die 4 bis 10 Kohlenstoffatome aufweisen, wobei das multimodale Polymer aus Ethylen eine Dichte von 910 bis 935 kg/m$^3$ und ein Mw/Mn von 2 bis 8 aufweist.

9. Folie nach einem der vorstehenden Ansprüche, wobei das multimodale Polymer aus Ethylen der Schicht (A) ein oder mehrere der folgenden Merkmale aufweist:

   a) MFR$_2$ von 0,5 bis 10 g/10 Min. (gemäß ISO 1133 bei 190 °C unter 2,16 kg Last);
   b) MFR$_{21}$/ MFR$_2$ von 13 bis 35 (MFR21 bei 190 °C unter 21,6 kg Last);
   c) MWD von 5 oder weniger.

10. Folie nach einem der vorstehenden Ansprüche, wobei das multimodale Polymer aus Ethylen der Schicht (A) 1-Buten und 1-Hexen umfasst, wobei das multimodale Polymer aus Ethylen insbesondere eine Ethylen-Buten-Copolymer-Komponente (i) und eine Ethylen-Hexen-Copolymer-Komponente (ii) umfasst, wobei Buten/Hexen die einzigen Comonomere sind, die in der jeweiligen Komponente vorliegen.

11. Folie nach einem vorstehenden Anspruch, wobei die Schicht (B) ein bimodales Ethylen/1-Buten/C6-C10-Alphaolefin-Terpolymer umfasst, das umfassen kann:

   (i) ein Homopolymer aus Ethylen mit niedrigerem Molekulargewicht und
   (ii) ein Terpolymer aus Ethylen mit höherem Molekulargewicht, 1-Buten und ein C6-C10-Alphaolefin, z. B. 1-Hexen;

oder

(i) ein Copolymer aus Ethylen mit niedrigerem Molekulargewicht und 1-Buten oder ein Copolymer aus Ethylen mit niedrigeren Molekulargewicht und ein C6-C10-Alphaolefin;

und

(i) ein Copolymer aus Ethylen mit höherem Molekulargewicht und 1-Buten, falls das Polymer mit niedrigerem Molekulargewicht (i) ein Copolymer aus Ethylen und C6-C10-Alphaolefin oder ein Terpolymer aus Ethylen, 1-Buten und ein C6-C10-Alphaolefin ist.

**12.** Folie nach einem vorstehenden Anspruch, die eine Siegelungsinitiationstemperatur von weniger als 100 °C aufweist.

**13.** Folie nach einem vorstehenden Anspruch, die eine Hot-Tack-Kraft von 3,20 N oder mehr aufweist.

**14.** Mehrschichtfolie nach Anspruch 1 bis 13, wobei das multimodale Polymer aus Ethylen der Schicht (A) ein Minimum von 20 Gew.-% Elution bei TREF in dem Temperaturbereich von 90 bis 110 °C umfasst; und das multimodale Ethylen-Copolymer oder -Terpolymer der Schicht (B) ein Minimum von 20 Gew.-% Elution bei TREF (Temperature-Rising-Elution-Fractionation-Verfahren, wie in der Beschreibung offenbart) in dem Temperaturbereich von 90 bis 110 °C umfasst.

**15.** Folie nach einem vorstehenden Anspruch, die eine Dicke von 10 bis 100 $\mu$m aufweist.

**16.** Prozess zur Vorbereitung einer Mehrschichtfolie nach Anspruch 1 bis 13, der umfasst:

Coextrudieren (I) einer ersten Zusammensetzung, die ein multimodales Polymer aus Ethylen mit mindestens zwei unterschiedlichen Comonomeren, die aus Alphaolefinen ausgewählt sind, die 4 bis 10 Kohlenstoffatome aufweisen, umfasst, wobei das multimodale Polymer aus Ethylen eine Dichte von 910 bis 935 kg/m3 und ein Mw/Mn von 2 bis 8 aufweist, um eine Außenschicht (A) zu bilden; und
(II) eine zweite Zusammensetzung, die ein multimodales Ethylen-Copolymer aus Ethylen und ein C4-10-Comonomer oder ein multimodales Ethylen-Terpolymer aus Ethylen und mindestens zwei C4-10-Comonomere oder ein Gemisch davon umfasst, wobei das multimodale Ethylen-Copolymer oder -Terpolymer eine Dichte von 910 bis 940 kg/m3 und ein Mw/Mn von 9 oder mehr aufweist; um eine Schicht (B) zu bilden;
und Blasen oder Gießen des Coextrudats, um die Mehrschichtfolie zu bilden.

## Revendications

**1.** Film multicouche comprenant au moins deux couches, une couche (B) et une couche extérieure (A), dans lequel la couche extérieure (A) comprend un polymère d'éthylène multimodal avec au moins deux comonomères différents sélectionnés parmi des alpha-oléfines ayant de 4 à 10 atomes de carbone et dans lequel ladite couche (B) comprend un copolymère d'éthylène multimodal d'éthylène et un seul comonomère en C4-10 ou un terpolymère d'éthylène multimodal d'éthylène et au moins deux comonomères en C4-10, ou un mélange de ceux-ci,

dans lequel le polymère d'éthylène multimodal de couche (A) a une densité de 910 à 935 kg/m$^3$, et un rapport Mw/Mn de 2 à 8 ; et
dans lequel ledit copolymère ou terpolymère d'éthylène multimodal de couche (B) a une densité de 910 à 940 kg/m$^3$ et un rapport Mw/Mn de 9 ou plus.

**2.** Film multicouche selon la revendication 1, comprenant au moins trois couches, une couche de noyau (B) et deux couches extérieures (A) et (C), dans lequel au moins la couche (A) comprend un polymère d'éthylène multimodal avec au moins deux comonomères différents sélectionnés parmi des alpha-oléfines ayant de 4 à 10 atomes de carbone, lequel polymère d'éthylène multimodal a une densité de 910 à 935 kg/m$^3$ et un rapport Mw/Mn de 2 à 8 ; et ladite couche de noyau (B) comprenant un copolymère d'éthylène multimodal d'éthylène et un seul comonomère en C4-10 ou un terpolymère d'éthylène multimodal d'éthylène et au moins deux comonomères en C4-10, ou un mélange de ceux-ci, dans lequel ledit copolymère ou terpolymère d'éthylène multimodal a une densité de 910 à 940 kg/m$^3$ et un rapport Mw/Mn de 9 ou plus.

**3.** Film selon la revendication 1 ou 2, dans lequel la couche extérieure (A) comprend au moins 80 % en poids du polymère d'éthylène multimodal.

**4.** Film selon une quelconque revendication précédente, dans lequel la couche extérieure (A) comprend 1 à 20 % en poids de LDPE.

**5.** Film selon une quelconque revendication précédente, comprenant deux ou trois couches seulement.

**6.** Film selon une quelconque revendication précédente, dans lequel la couche (B) comprend un terpolymère d'éthylène multimodal.

**7.** Film selon une quelconque revendication précédente, dans lequel la couche (B) comprend au moins 70 % en poids de copolymère ou terpolymère d'éthylène multimodal, de préférence au moins 80 % en poids.

**8.** Film selon une quelconque revendication précédente, dans lequel la couche (B) comprend de plus 1 à 30 % en poids, de préférence 5 à 15 % en poids d'un polymère d'éthylène multimodal avec au moins deux comonomères différents sélectionnés parmi des alpha-oléfines ayant de 4 à 10 atomes de carbone, lequel polymère d'éthylène multimodal a une densité de 910 à 935 kg/m$^3$ et un rapport Mw/Mn de 2 à 8.

**9.** Film selon l'une quelconque des revendications précédentes, dans lequel le polymère d'éthylène multimodal de couche (A) possède une ou plusieurs des particularités suivantes :

a) MFR$_2$ de 0,5 à 10 g/10 min (selon ISO 1133 à 190 °C sous une charge de 2,16 kg) ;
b) MFR$_{21}$/MFR$_2$ de 13 à 35 (MFR$_{21}$ à 190 °C sous une charge de 21,6 kg) ;
c) MWD de 5 ou moins.

**10.** Film selon l'une quelconque des revendications précédentes, dans lequel le polymère d'éthylène multimodal de couche (A) comprend du 1-butène et du 1-hexène, en particulier dans lequel le polymère d'éthylène multimodal comprend un composant de copolymère d'éthylène butène (i) et un composant de copolymère d'éthylène hexène (ii), où les butène/hexène sont les seuls comonomères présents dans le composant respectif.

**11.** Film selon l'une quelconque des revendications précédentes, dans lequel la couche (B) comprend un terpolymère bimodal d'éthylène/1-butène/alpha-oléfine en C6-C10, qui peut comprendre :

(i) un homopolymère de masse moléculaire inférieure d'éthylène, et
(ii) un terpolymère de masse moléculaire supérieure d'éthylène, de 1-butène et d'une alpha-oléfine en C6-C10, par exemple du 1-hexène ;

ou

(i) un copolymère de masse moléculaire inférieure d'éthylène et de 1-butène ou un copolymère de masse moléculaire inférieure d'éthylène et d'une alpha-oléfine en C6-C10;

et

(i) un copolymère de masse moléculaire supérieure d'éthylène et de 1-butène, si le polymère de masse moléculaire inférieure (i) est un copolymère d'éthylène et une alpha-oléfine en C6-C10, ou un terpolymère d'éthylène, de 1-butène et d'une alpha-oléfine en C6-C10.

**12.** Film selon une quelconque revendication précédente, ayant une température d'amorçage de scellage inférieure à 100°C.

**13.** Film selon une quelconque revendication précédente, ayant une tenue des soudures à chaud de 3,20 N ou plus.

**14.** Film multicouche selon la revendication 1 à 13, dans lequel le polymère d'éthylène multimodal de couche (A) comprend un minimum de 20 % en poids s'éluant dans du TREF dans la plage de températures de 90 à 110 °C ; et le copolymère ou terpolymère d'éthylène multimodal de couche (B) comprend un minimum de 20 % en poids s'éluant dans du TREF (procédé de Fractionnement par Élution à Élévation de Température comme révélé dans la description) dans la plage de températures de 90 à 110 °C.

15. Film selon une quelconque revendication précédente ayant une épaisseur de 10 à 100 μm.

16. Processus pour la préparation d'un film multicouche selon la revendication 1 à 13 comprenant :

la coextrusion (I) d'une première composition comprenant un polymère d'éthylène multimodal avec au moins deux comonomères différents sélectionnés parmi des alpha-oléfines ayant de 4 à 10 atomes de carbone, lequel polymère d'éthylène multimodal a une densité de 910 à 935 kg/m$^3$ et un rapport Mw/Mn de 2 à 8 de façon à former une couche extérieure (A) ; et
(II) une seconde composition comprenant un copolymère d'éthylène multimodal d'éthylène et un seul comonomère en C4-10 ou un terpolymère d'éthylène multimodal d'éthylène et au moins deux comonomères en C4-10, ou un mélange de ceux-ci, dans lequel ledit copolymère ou terpolymère d'éthylène multimodal a une densité de 910 à 940 kg/m$^3$ et un rapport Mw/Mn de 9 ou plus, de façon à former une couche (B) ;
et le soufflage ou la coulée du coextrudat pour former ledit film multicouche.

Figure 1

Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1472298 A
- WO 2016083209 A
- EP 2415598 A
- EP 2698251 A
- EP 1961558 A
- EP 1961557 A
- WO 9535323 A
- WO 0155230 A
- WO 2004000933 A
- EP 810235 A
- WO 9951646 A
- WO 9512622 A
- WO 9632423 A
- WO 9728170 A
- WO 9832776 A
- WO 9961489 A
- WO 03010208 A
- WO 03051934 A
- WO 03051514 A
- WO 2004085499 A
- EP 1752462 A
- EP 1739103 A
- WO 9212182 A
- WO 9618662 A

- US 4582816 A
- US 3405109 A
- US 3324093 A
- EP 479186 A
- US 5391654 A
- EP 1310295 A
- EP 1591460 A
- WO 2007025640 A
- US 4543399 A
- EP 699213 A
- WO 9425495 A
- EP 696293 A
- EP 1415999 A
- WO 0026258 A
- EP 887379 A
- EP 887380 A
- EP 887381 A
- EP 991684 A
- WO 0029452 A
- US 4621952 A
- EP 188125 A
- EP 250169 A
- EP 579426 A
- EP 1378528 A

**Non-patent literature cited in the description**

- **K. K. MCAULEY ; J. F. MCGREGOR.** On-line Inference of Polymer Properties in an Industrial Polyethylene Reactor. *AIChE Journal,* June 1991, vol. 37 (6), 825-835
- *IUPAC, Nomenclature of Inorganic Chemistry,* 1989
- **J. RANDALL.** *Macromol. Sci., Rev. Macromol. Chem. Phys.,* 1989, vol. 29, 201
- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128

- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, S1-S198
- **CASTIGNOLLES, P. ; GRAF, R. ; PARKINSON, M. ; WILHELM, M. ; GABORIEAU, M.** *Polymer 50,* 2009, 2373
- **SOARES, J.B.P.** Encyclopedia Of Polymer Science and Technology. John Wiley & Sons, 2001, vol. 10, 75-131
- *CHEMICAL ABSTRACTS,* 151840-68-5